# EUROPEAN PATENT APPLICATION

(11) **EP 4 697 774 A1**
(43) Date of publication of application: **18.02.2026**
(21) Application number: 24810431.7
(22) Date of filing: 22.05.2024
(51) Int. Cl.: H04W 12/069

(54) **COMMUNICATION METHOD, COMMUNICATION DEVICE, MEDIUM, AND PROGRAM PRODUCT**

(30) Priority: 22.05.2023 CN 202310581318
(71) Applicant: Huawei Technologies Co., Ltd., Shenzhen, Guangdong 518129 (CN)
(72) Inventor: WANG, Mingjun, Xi'an, Shaanxi 710071 (CN); MA, Rui, Xi'an, Shaanxi 710071 (CN); YAN, Zheng, Xi'an, Shaanxi 710071 (CN); WANG, Haiguang, Shenzhen, Guangdong 518129 (CN); LI, Tieyan, Shenzhen, Guangdong 518129 (CN)
(74) Representative: Pfenning, Meinig & Partner mbB
(86) International application number: PCT/CN2024/094754
(87) International publication number: WO 2024/240192

(57) **Abstract**

Embodiments of this application provide a communication method, including: A network registration function device receives a registration request from a network function device. The registration request includes an identity of the network function device. The network registration function device obtains an encrypted identity of the network function device based on the identity of the network function device. In addition, the network registration function device encrypts the registration request of the network function device by using a symmetric key between the network registration function device and a trusted environment device. The network registration function device sends a transaction request to a distributed management device. The transaction request includes a certificate of the network registration function device, an encrypted registration request, the encrypted identity of the network function device, and a signature of the network registration function device for the transaction request. In this way, the registration request of the network function device can be securely transmitted to a blockchain network, to implement distributed authentication and information sharing of a network service function, and ensure secure running of functions such as network function registration, access, and authorization.

## Description

This application claims priority to Chinese Patent Application No. 202310581318.2, filed with the China National Intellectual Property Administration on May 22, 2023 and entitled "COMMUNICATION METHOD, COMMUNICATION DEVICE, MEDIUM, AND PROGRAM PRODUCT", which is incorporated herein by reference in its entirety.

### TECHNICAL FIELD

This application generally relates to the communication field, and more specifically, to a communication method, a communication device, a computer-readable storage medium, and a computer program product.

### BACKGROUND

With development of technologies, a 5th generation (5G) mobile communication system achieves further improvements in performance, user experience, and flexibility. Achieving these goals requires not only in-depth improvements to new radio access, but also significant changes to a 5G core network. The most profound transformation is to use principles of a service-oriented architecture (Service Oriented Architecture, SOA) as a basis of a 5G service-based architecture (Service-based Architecture, SBA), and apply the SBA to control plane signaling. The SOA defines architecture principles for implementing a distributed system based on service orchestration. Basic concepts of the service-oriented architecture include three components: a service consumer, a service provider, and a service registry. The service provider provides a service invoked by a service user. The service registry is a searchable service contract repository that defines attributes and policies of different services exposed by a particular service provider. The service user queries the service registry and discovers the service based on a service contract provided. 3GPP specifies a REST-based service architecture as a blueprint for the SBA. In a service-based architecture of a 5G core network, a service is represented as a network function service. A group of related network function services constitute a network function (Network Function, NF).

The service-based architecture is beneficial to efficiency improvements and generally helps ensure security. However, in system design, openness and flexibility often conflict with security, privacy, and performance requirements. There is a need to strike a balance between promoting technological innovation and ensuring security and stability. Such a large-scale architecture reform results in a different communication mode between network elements. Therefore, a new mechanism is needed to meet a security requirement for a modem mobile network.

### SUMMARY

Embodiments of this application provide a communication method, a communication device, and a computer-readable storage medium. According to embodiments of this application, distributed authentication and information sharing of a network service function are implemented, and secure running of functions such as network function registration, access, and authorization is ensured.

According to a first aspect of this application, a communication method is provided. The method includes: A network registration function device receives a registration request from a network function device, where the registration request includes an identity of the network function device; obtains an encrypted identity of the network function device based on the identity of the network function device; encrypts the registration request of the network function device by using a symmetric key between the network registration function device and a trusted environment device; and sends a transaction request to a distributed management device. The transaction request includes a certificate of the network registration function device, an encrypted registration request, the encrypted identity of the network function device, and a signature of the network registration function device for the transaction request. In this way, the registration request of the network function device can be securely transmitted to a blockchain network.

In some embodiments, the registration request may further include at least one of the following: a type of the network function device; an identity of a network to which the network function device belongs; an address of the network function device; or a service supported by the network function device. Therefore, information about the network function device can be stored in the blockchain network and shared by different nodes.

In some embodiments, the transaction request may further include an identifier of a registration contract that the network registration function device requests to invoke. Therefore, the distributed management device can invoke the registration contract based on the identifier.

In some embodiments, the method may further include: generating an identity credential for the network function device based on determining that the network function device is valid; and sending the identity credential to the network function device. Therefore, the network function device has permission to register with the blockchain network.

In some embodiments, the registration request received from the network function device may be a first registration request. The method may further include: sending a second registration request to an authentication device; and receiving the certificate of the network registration function device from the authentication device. The second registration request includes an identity of the network registration function device and a signature of the network registration function device. Therefore, the network registration function device can register with the blockchain network.

In some embodiments, the method may further include: performing interactive authentication with the trusted environment device by using the certificate; and generating the symmetric key between the network registration function device and the trusted environment device. Therefore, the network registration function device and the trusted environment device can perform encryption or decryption by using the symmetric key, to ensure communication security.

In some embodiments, the method may further include: receiving a registration success message from the distributed management device; and sending the registration success message to the network function device. Therefore, the network function device can determine that registration with the blockchain network is successful.

According to a second aspect of this application, a communication method is provided. The method includes: A distributed management device receives a first transaction request from a network registration function device, where the first transaction request includes a certificate of the network registration function device, an encrypted registration request of a network function device, an encrypted identity of the network function device, and a signature of the network registration function device for the transaction request; determines, based on the certificate, whether the signature is valid; and sends a second transaction request to a trusted environment device based on determining that the signature is valid. The second transaction request includes an identity of the network registration function device, the encrypted registration request of the network function device, and the encrypted identity of the network function device. In this way, the distributed management device can verify validity of a transaction request and send the transaction request to a trusted environment for processing, to ensure transaction security.

In some embodiments, the first transaction request and the second transaction request may further include an identifier of a registration contract that the network registration function device requests to invoke. Therefore, the distributed management device can invoke the registration contract based on the identifier.

In some embodiments, the method may further include: receiving a registration success message of the network function device from the trusted environment device; and sending the registration success message to the network registration function device. Therefore, the distributed management device can invoke the registration contract based on the identifier.

According to a third aspect of this application, a communication method is provided. The method includes: A trusted environment device receives a transaction request from a distributed management device, where the transaction request includes an identity of a network registration function device, an encrypted registration request of a network function device, and an encrypted identity of the network function device; determines a symmetric key between the trusted environment device and the network registration function device based on the identity of the network registration function device; decrypts the encrypted registration request by using the symmetric key; and adds the network function device and a service supported by the network function device to a registration table in response to determining, based on the encrypted identity, that the transaction request is valid. In this way, the transaction request can be securely processed in a trusted environment, to implement secure registration of the network function device.

In some embodiments, the transaction request may further include an identifier of a registration contract that the network registration function device requests to invoke and a signature of the network registration function device for the transaction request. Therefore, the registration contract can be invoked based on the identifier.

In some embodiments, the registration request may include at least one of the following: an identity of the network function device; a type of the network function device; an identity of a network to which the network function device belongs; an address of the network function device; or the service supported by the network function device. Therefore, information about the network function device can be stored in a blockchain network and shared by different nodes.

In some embodiments, the encrypted identity of the network function device included in the transaction request may be a first encrypted identity. The method further includes: invoking the registration contract based on the identifier of the registration contract; obtaining a second encrypted identity of the network function device based on the identity of the network function device; and determining, based on determining that the first encrypted identity is the same as the second encrypted identity, that the transaction request is valid. Therefore, validity of the transaction request can be determined, so that security can be ensured.

In some embodiments, the method may further include: sending a registration success message of the network function device to the distributed management device. Therefore, the network function device can determine that registration with the blockchain network is successful.

According to a fourth aspect of this application, a communication method is provided. The method includes: A second network function device sends a service token request to a network registration function device; and receives a decrypted service token from the network registration function device. The service token request includes an identity of the second network function device, an identity of a network to which the second network function device belongs, an identity of a first network function device from which the second network function device requests a service, a type of the service requested by the second network function device from the first network function device, and an identity of a network to which the first network function device belongs. In this way, the second network function device can request, from a blockchain network, a service provided by another network function device, to simplify interaction.

In some embodiments, the method may further include: determining, by using a public key of a trusted environment device, whether the decrypted service token is valid; sending a service request to the first network function device based on determining that the service token is valid; and receiving a service response message from the first network function device. The service request includes the identity of the second network function device, a type of the second network function device, the identity of the network to which the second network function device belongs, the identity of the first network function device, a type of the first network function device, and the service token. Therefore, the service token request of the second network function device can be securely transmitted to the blockchain network.

According to a fifth aspect of this application, a communication method is provided. The method includes: A network registration function device receives a service token request from a second network function device; encrypts the service token request by using a symmetric key between the network registration function device and a trusted environment device; and sends a transaction request to a distributed management device. The service token request includes an identity of the second network function device, an identity of a network to which the second network function device belongs, an identity of a first network function device from which the second network function device requests a service, a type of the service requested by the second network function device from the first network function device, and an identity of a network to which the first network function device belongs. The transaction request includes an encrypted service token request, a certificate of the network registration function device, and a signature of the network registration function device for the transaction request. In this way, the service token request of the network function device can be securely transmitted to a blockchain network.

In some embodiments, the transaction request may further include an identifier of an authorization contract that the network registration function device requests to invoke. Therefore, the distributed management device can invoke the registration contract based on the identifier.

In some embodiments, the method may further include: receiving an encrypted service token from the distributed management device; decrypting the encrypted service token by using the symmetric key between the network registration function device and the trusted environment device; and sending a decrypted service token to the network function device. Therefore, the service token can be securely transmitted to the network function device.

According to a sixth aspect of this application, a communication method is provided. The method includes: A distributed management device receives a first transaction request from a network registration function device, where the first transaction request includes an encrypted service token request of a network function device, a certificate of the network registration function device, and a signature of the network registration function device for the transaction request; determines, based on the certificate, whether the signature is valid; and sends a second transaction request to a trusted environment device based on determining that the signature is valid. The second transaction request includes an identity of the network registration function device and the encrypted service token request. In this way, the distributed management device can verify validity of a transaction request and send the transaction request to a trusted environment for processing, to ensure transaction security.

In some embodiments, the first transaction request and the second transaction request may further include an identifier of an authorization contract that the network registration function device requests to invoke. Therefore, the distributed management device can invoke the registration contract based on the identifier.

In some embodiments, the method may further include: receiving an encrypted service token from the trusted environment device; and sending the encrypted service token to the network registration function device. Therefore, the service token can be securely transmitted.

According to a seventh aspect of this application, a communication method is provided. The method includes: A trusted environment device receives a transaction request from a distributed management device, where the transaction request includes an identity of a network registration function device and an encrypted service token request of a second network function device; determines a symmetric key between the network registration function device and the trusted environment device based on the identity of the network registration function device; decrypts the encrypted service token request based on the symmetric key; determines, based on the service token request, whether a first network function device provides a service requested by the second network function device; and generates a service token for the second network function device based on determining that the first network function device provides the service requested by the second network function device. In this way, the transaction request can be securely processed in a trusted environment, to implement secure authorization of the network function device.

In some embodiments, the transaction request may further include an identifier of an authorization contract that the network registration function device requests to invoke. Therefore, the registration contract can be invoked based on the identifier.

In some embodiments, the service token request may include at least one of the following: an identity of the second network function device; an identity of a network to which the second network function device belongs; an identity of the first network function device from which the second network function device requests the service; a type of the service requested by the second network function device from the first network function device; or an identity of a network to which the first network function device belongs. Therefore, the second network function device can request, from a blockchain network, a service provided by another network function device, to simplify interaction.

In some embodiments, the service token may include at least one of the following: the identity of the second network function device; the identity of the first network function device; a life cycle of the service token; or a signature algorithm of the trusted environment device. Therefore, the second network function device can request, by using the service token, the service provided by the first network function device.

In some embodiments, determining whether the first network function device provides the service requested by the second network function device may include: invoking the authorization contract based on the identifier of the authorization contract; obtaining an encrypted identity of the first network function device based on the identity of the first network function device; determining registration information of the first network function device based on the encrypted identity of the first network function device, to obtain a service supported by the first network function device; and determining whether the service supported by the first network function device includes the type of the service requested by the second network function device from the first network function device. Therefore, the service requested by the second network function device can be compared with the service supported by the first network function device.

In some embodiments, the communication method further includes: encrypting the service token by using the symmetric key; and sending an encrypted service token to the distributed management device. Therefore, the service token of the second network function device can be securely transmitted to the second network function device.

According to an eighth aspect of this application, a communication apparatus is provided. The communication apparatus includes a processor and a memory storing instructions. When the instructions are executed by the processor, the communication apparatus is enabled to perform the method according to any one of the first to seventh aspects and the implementations thereof.

According to a ninth aspect of this application, a chip is provided. The chip includes a processing circuit, configured to perform the method according to any one of the first to seventh aspects and the implementations thereof.

According to a tenth aspect of this application, a computer-readable storage medium is provided. The computer-readable storage medium stores instructions. When the instructions are executed by an electronic device, the electronic device is enabled to perform the method according to any one of the first to seventh aspects and the implementations thereof.

According to an eleventh aspect of this application, a computer program product is provided. The computer program product includes instructions. When the instructions are executed by an electronic device, the electronic device is enabled to perform the method according to any one of the first to seventh aspects and the implementations thereof.

It should be understood that the content described in the summary is not intended to limit key or important features of this application or limit the scope of this application. The following descriptions facilitate understanding of other features of this application.

### BRIEF DESCRIPTION OF DRAWINGS

FIG. 1A is a diagram of a network environment in which embodiments of this application may be implemented;
FIG. 1B is a diagram of a reference point architecture of a 5G core network related to embodiments of this application;
FIG. 1C is a diagram of a service-based architecture of a 5G core network related to embodiments of this application;
FIG. 1D is a diagram of a system architecture in which embodiments of this application may be implemented;
FIG. 2A to FIG. 2C are a diagram of interaction signaling for service authorization according to some embodiments of this application;
FIG. 3A and FIG. 3B show an example process of service authorization according to some embodiments of this application;
FIG. 4A and FIG. 4B show an example process of service authorization through a public blockchain structure;
FIG. 5A and FIG. 5B show an example process of network function registration according to some embodiments of this application;
FIG. 6A and FIG. 6B show an example process of token request authorization and network function service access according to some embodiments of this application;
FIG. 7 is a schematic flowchart of a method implemented by a network registration function device according to an embodiment of this application;
FIG. 8 is a schematic flowchart of a method implemented by a distributed management device according to an embodiment of this application;
FIG. 9 is a schematic flowchart of a method implemented by a trusted environment device according to an embodiment of this application;
FIG. 10 is a schematic flowchart of a method implemented by a network function device according to an embodiment of this application;
FIG. 11 is a schematic flowchart of a method implemented by a network registration function device according to an embodiment of this application;
FIG. 12 is a schematic flowchart of a method implemented by a distributed management device according to an embodiment of this application;
FIG. 13 is a schematic flowchart of a method implemented by a trusted environment device according to an embodiment of this application;
FIG. 14 is a simplified block diagram of an example device in a possible implementation according to an embodiment of this application; and
FIG. 15 is a simplified block diagram of an example device in a possible implementation according to an embodiment of this application.

Throughout all the accompanying drawings, same or similar reference numerals represent same or similar components.

### DESCRIPTION OF EMBODIMENTS

The following describes embodiments of this application in more detail with reference to the accompanying drawings. Although some embodiments of this application are shown in the accompanying drawings, it should be understood that this application may be implemented in various forms and should not be construed as being limited to embodiments described herein, and instead, these embodiments are provided for a more thorough and complete understanding of this application. It should be understood that the accompanying drawings and embodiments of this application are merely used as examples, but are not used to limit the protection scope of this application.

In the descriptions of embodiments of this application, the term "include" and similar terms thereof should be understood as open inclusion, that is, "include but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

Embodiments of this application may be implemented according to any appropriate communication protocol, including but not limited to cellular communication protocols such as the 3rd generation (3rd Generation, 3G), the 4th generation (4G), the 5th generation (5G), and a future communication protocol (for example, the 6th generation (6G)), wireless local area network communication protocols such as Institute of Electrical and Electronics Engineers (Institute of Electrical and Electronics Engineers, IEEE) 802.11, and/or any other protocols currently known or developed in the future.

The technical solutions in embodiments of this application are applied to a communication system that complies with any appropriate communication protocol, for example, a general packet radio system (General Packet Radio Service, GPRS), a global system for mobile communications (Global System for Mobile Communications, GSM), an enhanced data rates for GSM evolution (Enhanced Data rate for GSM Evolution, EDGE) system, a universal mobile telecommunications system (Universal Mobile Telecommunications Service, UMTS), a long term evolution (Long Term Evolution, LTE) system, a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronization Code Division Multiple Access, TD-SCDMA) system, a frequency division duplex (Frequency Division Duplex, FDD) system, a time division duplex (Time Division Duplex, TDD) system, a 5th generation (5G) system (for example, a new radio (New Radio, NR) system), a future communication system (for example, a 6th generation (6G) system), or the like.

For illustrative purposes, the following describes embodiments of this application in the context of a 5G communication system in 3GPP. However, it should be understood that embodiments of this application are not limited to this communication system, but may be applied to any communication system having a similar problem, for example, a wireless local area network (WLAN), a wired communication system, or another communication system developed in the future.

The term "terminal" or "terminal device" used in this application refers to any terminal device that can perform wired or wireless communication with a network device or another terminal device. The terminal device may be sometimes referred to as user equipment or UE. The terminal device may be any type of mobile terminal, fixed terminal, or portable terminal. The terminal device may be various wireless communication devices that have a wireless communication function. With emergence of an Internet of Things (Internet of Things, IOT) technology, more devices that previously have no communication function, for example without limitation to, a household appliance, a transportation tool, a tool device, a service device, and a service facility, start to obtain a wireless communication function by being configured with a wireless communication unit, so as to access a wireless communication network, and accept remote control. This type of device has a wireless communication function because the device is configured with a wireless communication unit. Therefore, this type of device also belongs to a scope of wireless communication devices. For example, the terminal device may include a mobile cellular phone, a cordless phone, a mobile terminal (Mobile Terminal, MT), a mobile station, a mobile device, a wireless terminal, a handheld device, a client, a subscription station, a portable subscription station, an Internet node, a communicator, a desktop computer, a laptop computer, a notebook computer, a tablet computer, a personal communication system device, a personal navigation device, a personal digital assistant (Personal Digital Assistant, PDA), a wireless data card, a wireless modem (Modulator demodulator, Modem), a positioning device, a radio broadcast receiver, an e-book device, a game device, an IoT device, a vehicle-mounted device, an aircraft, a virtual reality (Virtual Reality, VR) device, an augmented reality (Augmented Reality, AR) device, a wearable device (for example, a smartwatch), a terminal device in a 5G network or any terminal device in an evolved public land mobile network (Public Land Mobile Network, PLMN), another device that can be used for communication, or any combination thereof.

The term "network node" or "network device" used in this application refers to an entity or a node that may be configured to communicate with a terminal device, for example, may be an access network device. The access network device may be an apparatus, for example, a radio access network (Radio Access Network, RAN) device, deployed in a radio access network to provide a wireless communication function for the mobile terminal. The access network device may include various types of base stations. The base station is configured to provide a radio access service for the terminal device. Specifically, each base station corresponds to one service coverage area. A terminal device entering the area may communicate with the base station through a radio signal, to receive the radio access service provided by the base station. The service coverage areas of the base stations may overlap, and a terminal device in an overlapping area may receive radio signals from a plurality of base stations. Therefore, the plurality of base stations may simultaneously provide services for the terminal device. Based on a size of the service coverage area, the access network device may include a macro base station providing a macro cell (Macro cell), a micro base station providing a micro cell (Pico cell), a pico base station providing a pico cell, and a femto base station providing a femto cell (Femto cell). In addition, the access network device may further include various forms of relay stations, access points, remote radio units (Remote Radio Units, RRUs), radio heads (Radio Heads, RHs), remote radio heads (Remote Radio Heads, RRHs), and the like. In systems using different radio access technologies, the access network device may have different names. For example, the access network device is referred to as an evolved NodeB (evolved NodeB, eNB or eNodeB) in a long term evolution (Long Term Evolution, LTE) network, is referred to as a NodeB (NodeB, NB) in a 3G network, and may be referred to as a gNodeB (gNB) or an NR NodeB (NR NB) in the 5G network.

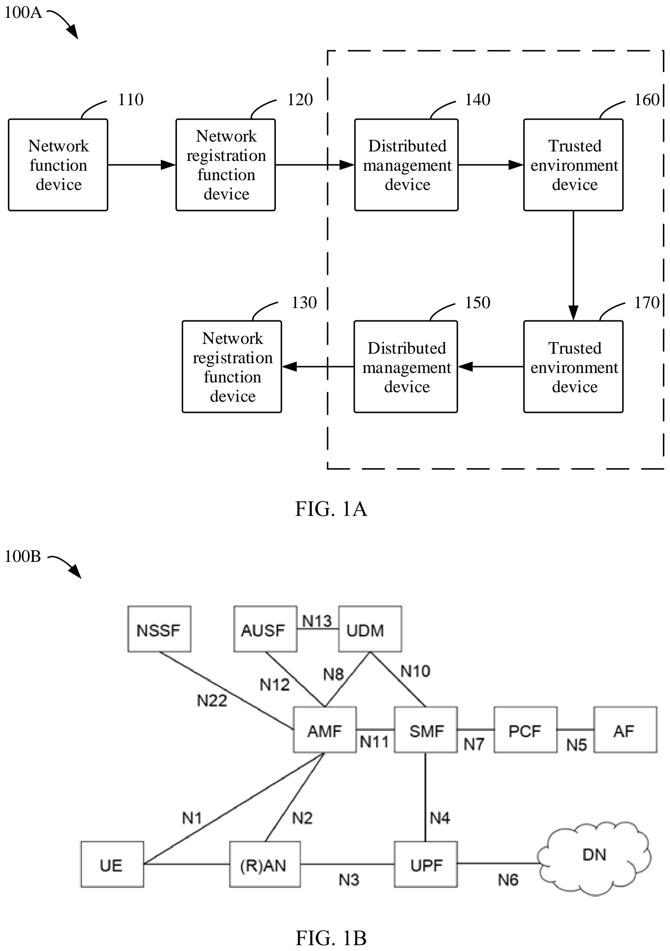

FIG. 1A is a diagram of a network environment 100 in which embodiments of this application may be implemented. As shown in FIG. 1A, the system may include a network function device 110, two network registration function devices 120 and 130, two distributed management devices 140 and 150, and two trusted environment devices 160 and 170. In some embodiments, the network function device 110 may be implemented as a network function service consumer, the network registration function devices 120 and 130 may be implemented as network function repository functions NRFs, the distributed management devices 140 and 150 may be implemented as distributed nodes (Peers) in a blockchain network, and the trusted environment devices 160 and 170 may be implemented as trusted computing environments TEEs deployed on each peer node. In some embodiments, the network registration function devices 120 and 130 may belong to different operators. A network function device that belongs to the same operator as the network registration function device 120 may request a service provided by a network function device that belongs to another operator. How to implement service authorization is further described in detail below. It should be understood that the quantities shown in FIG. 1A are merely an example. During implementation, any appropriate quantity of devices may be included based on a scale and an architecture of a network. This is not limited in this application.

It should be understood that the communication system 100A may be applicable to various scenarios. For example, an application scenario of the communication system 100A includes but is not limited to an LTE system, a 5G system, a new radio (New Radio, NR) system, and a future communication system, such as a 6th generation mobile communication system. This is not limited in embodiments of this application. It should also be understood that the foregoing communication system may comply with any appropriate communication technology and a corresponding communication standard. In addition, the device names in FIG. 1A are merely an example and not intended for limitations. In a future communication architecture, the corresponding device may be implemented as a device having a same function.

FIG. 1B is a diagram of a reference point architecture 100B of a 5G core network related to embodiments of this application. Logical entities with different interfaces and dependencies have been defined. All network elements are decomposed into individual network functions and are interconnected through point-to-point interfaces. This architecture design based on previous generations of mobile networks is referred to as a reference point architecture. As shown in FIG. 1B, the reference point architecture 100B of the 5G core network may include UE, a (radio) access network (R)AN, a user plane function (User Plane Function, UPF), a data network (Data Network, DN), an access and mobility management function (Access and Mobility Management Function, AMF), a session management function (Session Management Function, SMF), a policy control function (Policy Control Function, PCF), an application function (Application Function, AF), a network slice selection function (Network Slicing Service Function, NSSF), an authentication server function (Authentication Server Function, AUSF), and unified data management (User Data Management, UDM). Each network function can communicate with only a network function that has a specified reference point. For example, the UE can only send a non-access stratum (Non-Access Stratum, NAS) message to the AMF, or send data and a radio signaling message to the (R)AN.

A 5th generation mobile communication system achieves further improvements in performance, user experience, and flexibility. Achieving these goals requires not only in-depth improvements to new radio access, but also significant changes to a 5G core network. The most profound transformation is to use principles of a service-oriented architecture as a basis of a 5G SBA and apply the SBA to control plane signaling. The SOA defines architecture principles for implementing a distributed system based on service orchestration. Basic concepts of the service-oriented architecture include three components: a service consumer, a service provider, and a service registry. The service provider provides a service invoked by a service user. The service registry is a searchable service contract repository that defines attributes and policies of different services exposed by a particular service provider. The service user queries the service registry and discovers the service based on a service contract provided. 3GPP specifies a service architecture based on representational state transfer (Representation State Transfer, REST) as a blueprint for the SBA. In a service-based architecture of a 5G core network, a service is represented as a network function service. A group of related network function services constitute a network function (Network Function, NF).

The service-based architecture mainly has the following three advantages: First, a telecom provider can rely on a currently accumulated mature business and rich tools to promote creation of new services and accelerate future innovation. Second, combining standardized and industry-verified technologies can avoid defining a complete signaling protocol from scratch. This is beneficial to efficiency improvements and generally helps ensure security. Finally, core network elements are decoupled into individual network function services and deployed as stateless services. A service status is stored in an unstructured data storage function (Un Structured Data Function, UDSF) of the core network. This also meets an objective of network function virtualization (Network Function Virtualization, NFV). The service-based architecture should allow networks to adapt to changing loads while enabling operators to seamlessly manage and maintain increasingly diversified network function deployments. In general, the service-based architecture has the following benefits: production network updatability, scalability, modularity, reusability, and openness.

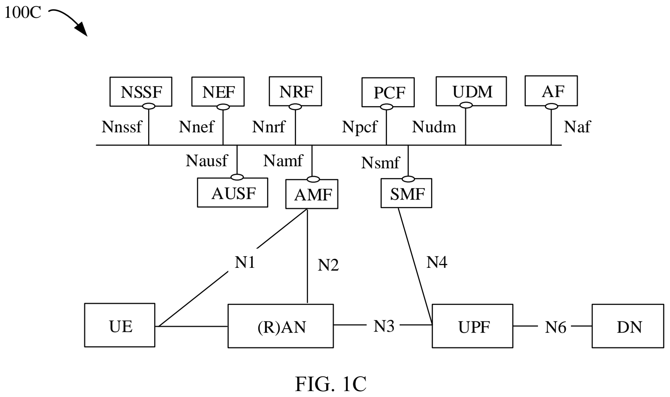

However, a key requirement of mobile network operators for 5G is to introduce new services and functions in a more flexible manner, minimize impact on other entities in a network, and implement comprehensive virtualization to achieve cost-effective and efficient deployment. In a 5G service-based architecture (Service-based Architecture, SBA), a point-to-point interface is replaced by a common bus connecting all network functions, as shown in FIG. 1C. FIG. 1C is a diagram of a service-based architecture of a 5G core network related to embodiments of this application. A control plane function, such as AUSF, AMF, SMF, NSSF, NEF, NRF, PCF, UDM, or AF, interacts through a service-based interface. For example, a service-based interface exhibited by the AUSF is Nausf; a service-based interface exhibited by the AMF is Namf; a service-based interface exhibited by the SMF is Nsmf; a service-based interface exhibited by the NSSF is Nnssf; a service-based interface exhibited by the NEF is Nnef; a service-based interface exhibited by the NRF is Nnrf; a service-based interface exhibited by the PCF is Npcf; a service-based interface exhibited by the UDM is Nudm; and a service-based interface exhibited by the AF is Naf. All control plane network functions in the 5G core network use REST-based services to provide one or more functions that can be discovered, requested, or subscribed by other network functions. To achieve these objectives, the 5G service-based architecture further defines two new functional entities: an NF repository function (Network Registration Function, NRF) and a network exposure function (Network Exposure Function, NEF). The NRF provides network function service discovery, management, authorization, and the like. The NEF exposes a network function service from the network to an authorized external application to adjust a network configuration, monitor a machine type communication device, and the like.

In service registration and deregistration phases, the NRF records available network function instances and supported services, and enables network functions to discover each other and their provided services in the network. As a service registry, the NRF also provides and maintains service contracts represented by configuration files in network function instances. The network functions may be classified into a service consumer requesting a service and a service producer providing the service. A network function service is defined as a capability, so that the network function exposes the service to another authorized network function for use through a service-based interface. Network function service authorization is performed by the service producer. The service consumer is authorized based on a policy negotiated by the network function, a service operator, and the like with a network function type and source limited for the accessible service provided by the service producer.

The service-based architecture further changes a protocol stack over a basic IP connection between network functions. Different from the Stream Control Transmission Protocol (Stream Control Transmission Protocol, SCTP) and Diameter protocol used in mobile networks in the past, control plane signaling in a 5G core network is constructed on top of the Transport Layer Protocol (Transport Control Protocol, TCP) and Hypertext Transfer Protocol (HTTP/2). In particular, HTTP/2 plays a key role in network function services. Communication between the network function services is implemented by invoking a REST-based application programming interface (Application Programming Interface, API) under an HTTP/2 routing mechanism. HTTP/2 over TCP is used as a protocol for invoking the API. Network elements in an access network, such as a RAN and UE, and user plane network functions, still communicate by using specified reference points. In the service-based architecture, a point-to-point interface in the reference point architecture is mapped to a service-based interface (Service-based Interface, SBI). Each network function provides a corresponding service-based interface for a network function that serves as a service user to invoke a service. To ensure consistency of network functions, OpenAPI 3.0 is used as a service contract definition language for all service-based interfaces. The OpenAPI specification may be represented as a JavaScript object notation (JavaScript Object Notation, JSON) object, and provides a standardized manner to specify an API endpoint and application layer data included in a request response message.

However, it should be noted that in system design, openness and flexibility often conflict with security, privacy, and performance requirements. There is a need to strike a balance between promoting technological innovation and ensuring security and stability. Such a large-scale architecture reform results in a different communication mode between network elements. Therefore, a new mechanism is needed to meet a security requirement for a modem mobile network.

The 5G core network uses the service-based architecture. All integrated network elements are replaced by network functions. Conventional 5G network function access authorization uses an OAuth 2.0-based authorization solution. Various security and efficiency problems occur in a large-scale cross-operator network function access and authorization scenario. First, a 5G network introduces a security edge protection proxy (Security Edge Protection Proxy, SEPP) at an edge of each operator for clear division into security domains. However, cross-domain access to a network function needs to be performed across SEPPs of two network domains. In addition, related security operations and filtering, such as data encryption, signature, or internal and external address mapping, are completed in the SEPPs. These operations undoubtedly reduce efficiency of cross-domain network access. Second, an internetwork packet exchange (Internetwork Packet Exchange, IPX) node may be introduced between SEPPs for relay transmission. The IPX node may modify content of a transmitted message, resulting in a security threat to point-to-point secure transmission. Finally, a traditional point-to-point cross-operator access authorization method has a severe efficiency problem in a large-scale cross-domain network function access and authorization scenario. For example, n(n - 1)/2 point-to-point access control policies need to be maintained between n operators, namely, O(n2) orders of magnitude. 5G supports deployment of small or even micro operators. This greatly increases an operator quantity n and leads to more complex point-to-point access control policies.

In view of this, embodiments of this application provide a communication method. A secure and efficient cross-operator network function access and authorization solution is designed by using a blockchain technology and features such as distributed, decentralized, and tamper-resistant of a blockchain. In the method, a network registration function device receives, from a network function device, a registration request that includes an identity of the network function device. The network registration function device obtains an encrypted identity of the network function device based on the identity of the network function device. The network registration function device encrypts the registration request of the network function device by using a symmetric key between the network registration function device and a trusted environment device. Then, the network registration function device sends a transaction request to a distributed management device. The transaction request includes a certificate of the network registration function device, an encrypted registration request, the encrypted identity of the network function device, and a signature of the network registration function device for the transaction request. The network registration function device further receives a service token request from a second network function device. The service token request includes an identity of the second network function device, an identity of a network to which the second network function device belongs, an identity of a first network function device from which the second network function device requests a service, a type of the service requested by the second network function device from the first network function device, and an identity of a network to which the first network function device belongs. The network registration function device encrypts the service token request, and then sends a transaction request to the distributed management device. The transaction request includes an encrypted service token request, the certificate of the network registration function device, and a signature of the network registration function device for the transaction request.

In this way, a distributed trust relationship is established between a plurality of operators that do not trust each other, to replace a point-to-point trust relationship structure of operators in a conventional core network structure and simplify trust establishment between a plurality of operators. Functions such as network function registration and access authorization of an operator are deployed on a blockchain network, and can be automatically executed with function trustworthiness ensured. Secure storage and cross-domain sharing of network function information of the operator are implemented. To make the objectives, technical solutions, and advantages of this application clearer, the following further describes this application in detail with reference to the accompanying drawings. Specific operation methods, function descriptions, and the like in method embodiments may also be applied to apparatus embodiments or system embodiments.

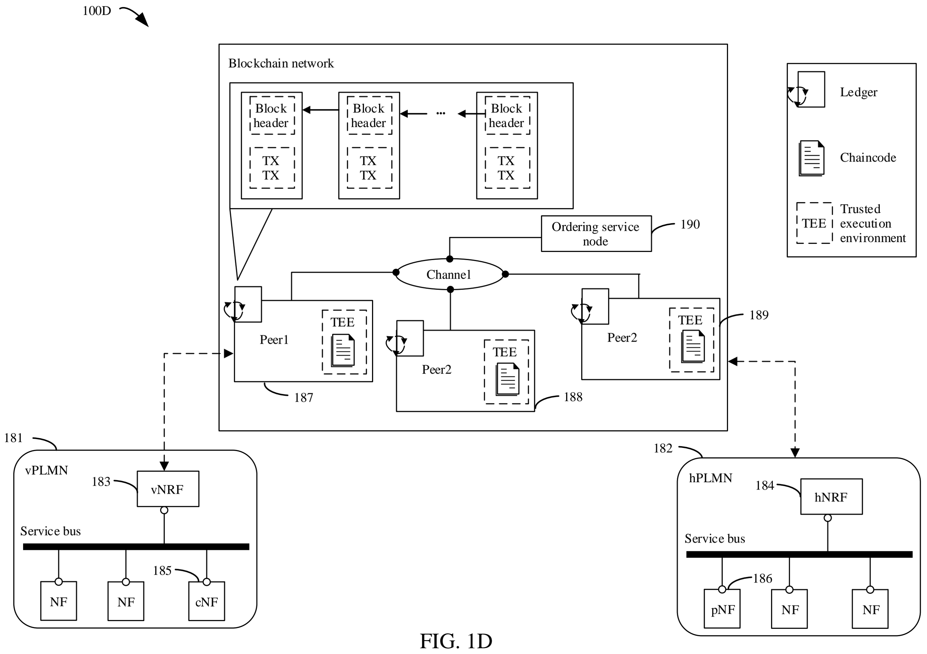

FIG. 1D is a diagram of a system architecture 100D in which embodiments of this application may be implemented. The system architecture 100D is a consortium blockchain-based cross-operator network function authorization and authentication framework. The framework aims to improve security, privacy, and communication efficiency of cross-operator network function authorization, authentication, and access by using a consortium blockchain technology.

Network elements in embodiments of this application mainly include a network function provider pNF, a network function consumer cNF, a network function repository function vNRF/hNRF in an access/registration network, and a blockchain management node. The network function provider pNF may provide a network logic module of a specific network function service. The network function consumer cNF may access or invoke a network function module of another network function service. The network function repository function vNRF/hNRF in the access/registration network supports network function service registration, discovery, authentication, and access authorization, maintains information about a network function module, and provides an IP address or identifier of an NF instance or NF. One or more blockchain management nodes are deployed in each public land mobile network, and are responsible for building and maintaining a consortium blockchain, specifically including blockchain platform initialization, blockchain application registration and management, consensus mechanism execution, block generation, and the like. The management nodes specifically include a certificate authority node, an ordering service node Orderer, a distributed node Peer, and a trusted computing environment TEE. The certificate authority node provides user management services such as registration, identity authentication, and certificate issuance for nodes in a consortium blockchain network. The ordering service node is responsible for ordering all received transactions and packaging the transactions into a block. The distributed node is an endorsement node, which processes a transaction proposal based on an endorsement policy, invokes a smart contract to process the transaction proposal, and signs and endorses an execution result. Each peer node stores a blockchain ledger (Ledger), and stores all confirmed transactions in a form of a hash chain. In addition, the peer node maintains blockchain status information (State). The trusted computing environment TEE is a hardware-level secure computing environment, and is deployed on each peer node. A secure and trusted execution environment can be created on the peer node. In the environment, a smart contract can be deployed and executed, and data on a blockchain can be securely processed.

The framework is applicable to a cross-operator service scenario. The scenario includes two or more public land mobile networks PLMNs. As shown in FIG. 1D, the system architecture 100D may include a visited network vPLMN 181 and a home network hPLMN 182. The system architecture 100D may further include an NRF, which supports network service registration, authentication, discovery, access authorization, and the like, and may maintain available NF instances and NF configuration files. For brevity of description, only a case in which two NRF entities, namely, vNRF 183 in vPLMN 181 and hNRF 184 in hPLMN 182, are included is described in this embodiment of this application. NFs maintained by the NRF include cNF 185 and pNF 186. A blockchain network in the system architecture 100D includes a plurality of blockchain management nodes, for example, Peer1 187, Peer2 188, and Peer2 189. The blockchain network supports registration and management of a network function node, and cross-operator access control, authorization, automatic generation of an access token, identity authentication, and the like for NFs. The blockchain network in the system architecture 100D further includes a trusted computing environment (TEE). The environment is deployed on the blockchain management node, to securely store data on a blockchain and execute a smart contract. The blockchain management nodes further include an ordering service node 190.

In the system architecture, cNF 185 is registered with vNRF 183 in vPLMN 181, and pNF 186 is registered with hNRF 184 in hPLMN 182. The NRF maintains a list of configuration files of NF instances, including but not limited to an instance identity (ID) of the NF, a type (Type) of the NF, an identity (PLMN ID) of a network to which the NF belongs, a fully qualified domain name (FQDN) or an IP address of the NF, capability information (Capacity) of the NF, and priority information (Priority) of the NF. cNF 185 in vPLMN 181 sends a service discovery request to a local NRF, namely, vNRF 183, to query a network function instance locally or in another network (for example, hPLMN 184). In the present invention, to simplify the process, it is assumed that cNF 185 wants to access a network service provided by a network function provider pNF of another operator's network hPLMN 182. cNF 185 and pNF 186 are registered with different networks PLMNs, and there is no trust relationship between cNF 185 and pNF 186. As a result, cNF 185 needs to establish a trust relationship with pNF 186 through authentication and authorization services of vNRF 183 and hNRF 184 and invoke a network service provided by pNF 186. vNRF 183 and hNRF 184 perform authentication and access authorization on cNF 185, and issue an access authorization token to cNF 185. cNF 185 presents the access authorization token to pNF 186 to request access to the service provided by pNF 186. pNF 186 provides the corresponding network service for the network function consumer by verifying the identity and access authorization token of cNF 185.

In the system architecture, two mobile operators' networks are connected to one blockchain network. The blockchain network is responsible for cross-domain discovery, identity authentication, access authorization, and the like of a network function. A smart contract (chaincode) deployed in a blockchain system implements automatic access authentication and authorization, to generate a corresponding access token for a network function service requester. In addition, the blockchain system generates a block according to a consensus mechanism to record cross-domain access control information of the system and implement cross-domain sharing and synchronization of access authorization information. To implement secure storage and confidential computing of network function information in an operator's network, a trusted execution environment (TEE) is deployed on a management node (for example, a peer node) in a blockchain system, and a related smart contract application is deployed in the TEE. Smart contracts running in the TEE can achieve secure user registration, access authorization, and the like. In addition, a running result can be encapsulated in ciphertext form, to generate a block, which is finally stored in a blockchain ledger.

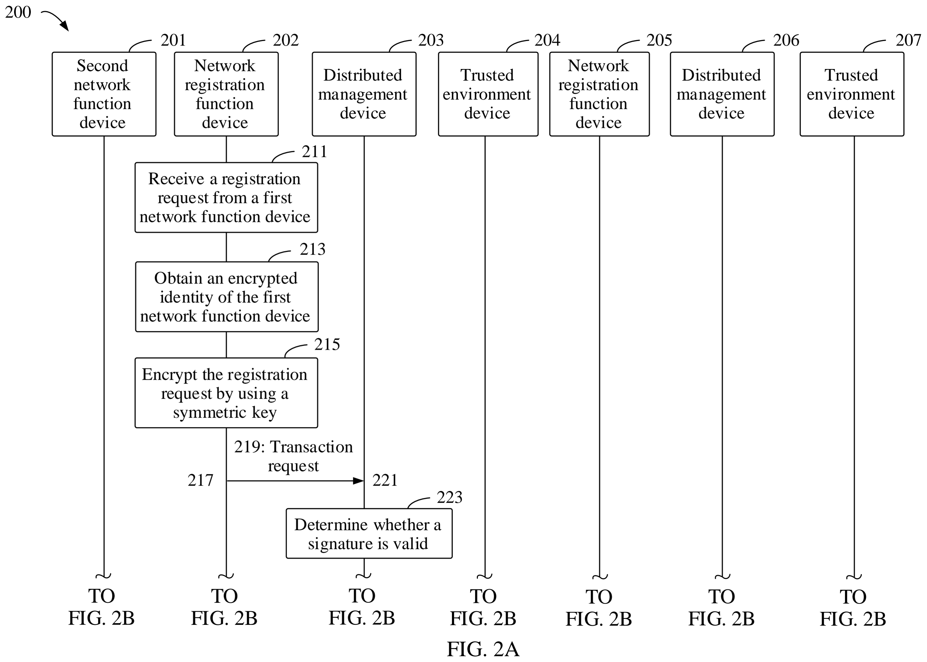

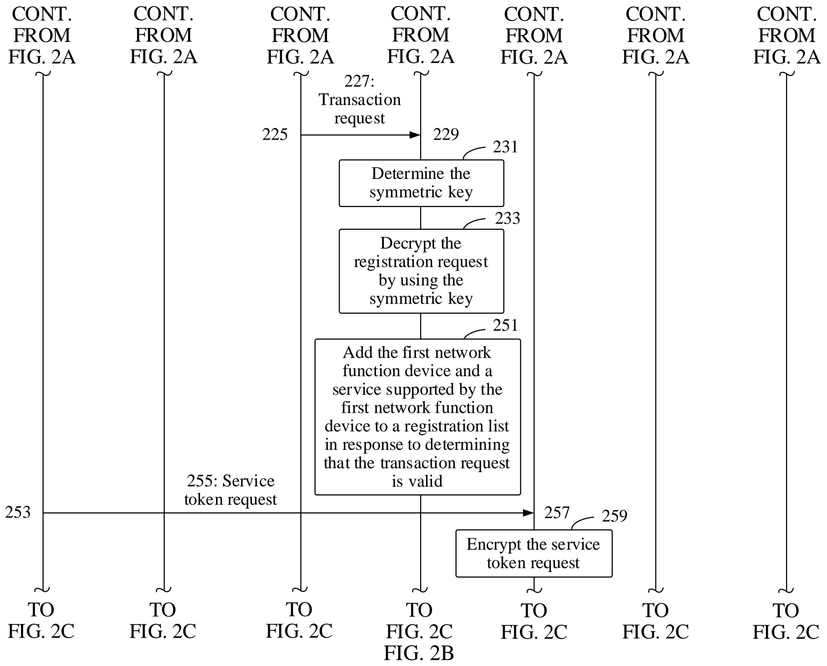

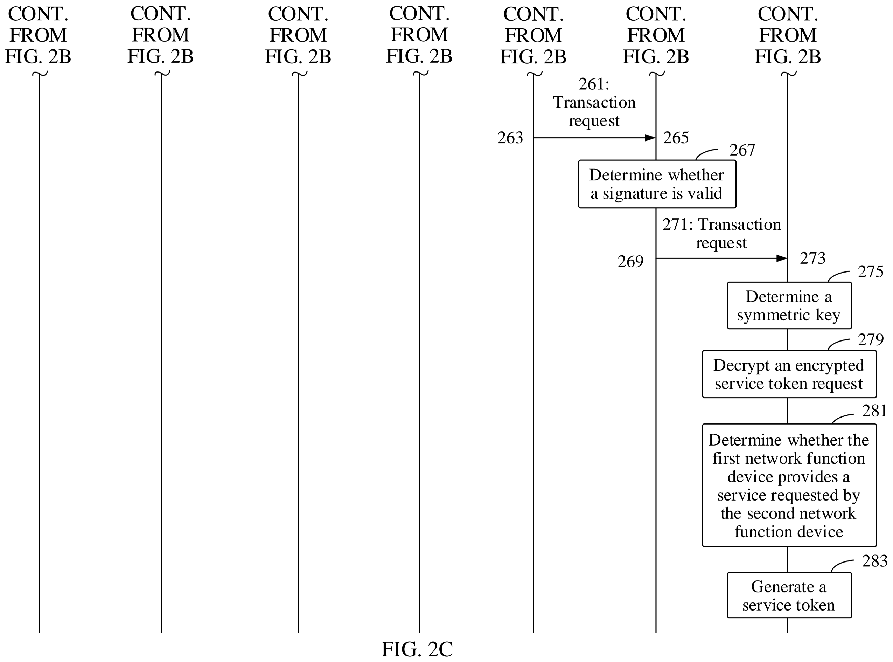

FIG. 2A to FIG. 2C are a diagram of interaction signaling for service authorization according to some embodiments of this application. For clarity of description without any limitation, a process 200 is described with reference to FIG. 1A. In this implementation, the network function device 110 is implemented as a second network function device 201, the network registration function device 120 is implemented as a network registration function device 202, the network registration function device 130 is implemented as a network registration function device 205, the distributed management device 140 is implemented as a distributed management device 203, the distributed management device 150 is implemented as a distributed management device 206, the trusted environment device 160 is implemented as a trusted environment device 204, and the trusted environment device 170 is implemented as a trusted environment device 207.

In the process 200, the network registration function device 202 receives (211) a registration request from a first network function device. The registration request includes an identity of the first network function device. For example, the network registration function device 202 may be a network repository function device hNRF in a home network hPLMN, and the first network function device may be a network function provider pNF. The network registration function device 202 obtains (213) an encrypted identity of the first network function device based on the identity of the first network function device. For example, the network registration function device 202 may perform hashing on the identity (ID) of the first network function device to obtain the encrypted identity of the first network function device. The network registration function device 202 encrypts (215) the registration request of the first network function device by using a symmetric key between the network registration function device 202 and the trusted environment device 204. The symmetric key is a session key negotiated by the network registration function device 202 and the trusted environment device 204. Then, the network registration function device 202 sends (217) a transaction request 219 to the distributed management device 203. The transaction request 219 includes a certificate of the network registration function device, an encrypted registration request, the encrypted identity of the first network function device, and a signature of the network registration function device 202 for the transaction request 219. The transaction request 219 is a transaction proposal of the registration request of the first network function device.

In some embodiments, the registration request may further include a type of the first network function device, an identity of a network to which the first network function device belongs, an address of the first network function device, a service supported by the first network function device, or a combination of one or more of the foregoing. In some embodiments, the transaction request 219 further includes an identifier of a registration contract that the network registration function device 202 requests to invoke. The registration contract may be a smart contract deployed in a trusted execution environment, so that user registration can be securely performed. In addition, a running result can be encapsulated in ciphertext form, to generate a block, which is finally stored in a blockchain ledger.

In some embodiments, based on determining that the first network function device is valid, the network registration function device 202 may generate an identity credential for the first network function device, and send the identity credential to the first network function device. In other words, after receiving the registration request, the network registration function device 202 verifies validity of the first network function device, generates an identity credential or a certificate for the valid first network function device, and sends the identity credential or the certificate to the first network function device through a secure channel. In some embodiments, the network registration function device 202 may send a second registration request to an authentication device. The second registration request includes an identity of the network registration function device 202 and a signature of the network registration function device 202. The authentication device may be a certificate authority (CA) included in a consortium blockchain network. The CA is responsible for generating a basic parameter of a system, managing an identity of a node, and generating a corresponding identity certificate (Credential) for the node. The certificate may be used for identity authentication, access authorization, and the like of the node in the system. The CA verifies an identity of an operator and the identity of the network registration function device, generates a public-private key pair for the network registration function device, and sends the public-private key pair to the network registration function device through a secure channel. After authentication succeeds, the network registration function device 202 receives the certificate of the network registration function device 202 from the authentication device. In some embodiments, the network registration function device 202 performs interactive authentication with the trusted environment device 204 by using the certificate, and generates the symmetric key between the network registration function device 202 and the trusted environment device 204. For example, the network registration function device 202 may remotely authenticate the trusted environment device 204 on a consortium blockchain management node.

With continued reference to FIG. 2A to FIG. 2C, the distributed management device 203 receives (221) the transaction request 219 from the network registration function device 202. The transaction request 219 includes the certificate of the network registration function device 202, the encrypted registration request of the first network function device, the encrypted identity of the first network function device, and the signature of the network registration function device 202 for the transaction request 219.

The distributed management device 203 determines (223), based on the certificate, whether the signature is valid. For example, the distributed management device 203 may obtain a public key of the network registration function device 202 based on the certificate of the network registration function device 202, and then verify validity of the transaction request by using the public key. The distributed management device 203 sends (225) a transaction request 227 to the trusted environment device 204 based on determining that the signature is valid. The transaction request 227 includes the identity of the network registration function device 202, the encrypted registration request of the first network function device, and the encrypted identity of the first network function device. In some embodiments, the transaction request 219 and the transaction request 227 further include the identifier of the registration contract that the network registration function device 202 requests to invoke.

Correspondingly, the trusted environment device 204 receives (229) the transaction request 227 from the distributed management device 203. The trusted environment device 204 determines the symmetric key between the trusted environment device 204 and the network registration function device 202 based on the identity of the network registration function device 202. The trusted environment device 204 decrypts (233) the encrypted registration request by using the symmetric key. For example, the trusted environment device 204 may decrypt the encrypted registration request by using the symmetric key to obtain registration information of the network function device. The trusted environment device 204 obtains the identity of the network function device from the registration information of the network function device. After determining, based on the encrypted identity, that the transaction request 227 is valid, the trusted environment device 204 adds (251) the first network function device and the service supported by the first network function device to a registration table. For example, the trusted environment device 204 may search a local ledger based on the encrypted identity, and if no entry for the encrypted identity of the network function device is retrieved, create a new key-value entry; or if an entry for the encrypted identity is retrieved, update a key value. If the creation or update is complete, a chaincode running status and an encrypted key-value entry are returned.

In some embodiments, the encrypted identity of the first network function device included in the transaction request 227 may be a first encrypted identity, and the trusted environment device 204 may further invoke the registration contract based on the identifier of the registration contract. The trusted environment device 204 obtains a second encrypted identity of the first network function device based on the identity of the first network function device. For example, the trusted environment device 204 may perform hashing on the identity of the first network function device to obtain the second encrypted identity of the first network function device. The trusted environment device 204 compares the second encrypted identity with the first encrypted identity included in the transaction request 227. If the first encrypted identity is the same as the second encrypted identity, the trusted environment device 204 determines that the transaction request 227 is valid.

In some embodiments, the trusted environment device 204 may send a registration success message of the first network function device to the distributed management device 203. In addition, the distributed management device 203 may receive the registration success message of the first network function device from the trusted environment device 204, and send the registration success message to the network registration function device 202. Optionally, the network registration function device 202 may receive the registration success message from the distributed management device 203. Then, the network registration function device 202 sends the registration success message to the first network function device. In some examples, the distributed management device 203 generates a proposal response based on a result and output of executing a smart contract by the trusted environment device 204, and returns the proposal response to the network registration function device 202. The network registration function device 202 submits, according to an endorsement mechanism, the collected proposal response to an ordering service node. The ordering service node performs global transaction ordering, performs broadcasting to all distributed management devices for confirmation. If the confirmation succeeds, the distributed management device writes the transaction into the local ledger. At this point, registration and secure information storage of the network function device are completed.

With continued reference to FIG. 2A to FIG. 2C, the second network function device 201 sends (253) a service token request 255 to the network registration function device 205. The service token request 255 includes an identity of the second network function device 201, an identity of a network to which the second network function device 201 belongs, the identity of the first network function device from which the second network function device 201 requests a service, a type of the service requested by the second network function device 201 from the first network function device, and the identity of the network to which the first network function device belongs. The second network function device 201 may be a network function consumer cNF in a visited network vPLMN. The network registration function device 205 may be a network repository function device vNRF in the visited network vPLMN. For example, cNF discovers, through a service discovery function, a network function service pNF provided by another network operator (for example, hPLMN). When requesting the service from pNF in hPLMN for the first time, cNF needs to request an access token (Access Token) from a network to which pNF belongs. cNF first sends a token request message to vNRF in vPLMN to which cNF belongs.

Correspondingly, the network registration function device 205 receives (257) the service token request 255 from the second network function device 201. The network registration function device 205 encrypts (259) the service token request 255 by using a symmetric key between the network registration function device 205 and the trusted environment device 207. Then, the network registration function device 205 sends (263) a transaction request 261 to the distributed management device 206. The transaction request 261 includes an encrypted service token request, a certificate of the network registration function device 205, and a signature of the network registration function device 205 for the transaction request 261. In addition, the transaction request 261 may further include an identifier of an authorization contract that the network registration function device 205 requests to invoke. For example, the network registration function device 205 packages the encrypted service token request, an identity of the network registration function device 205, an invoked smart contract, and a signature of the network registration function device 205 for the transaction proposal as a payload into the transaction request 261. After signing the transaction proposal, the network registration function device 205 sends the transaction proposal to the distributed management device 206 according to the endorsement mechanism, to invoke the smart contract.

The distributed management device 206 receives (265) the transaction request 261 from the network registration function device 205. The distributed management device 206 determines, based on the certificate, whether the signature is valid. If the signature is valid, the distributed management device 206 sends (269) a transaction request 271 to the trusted environment device 207. The transaction request 271 includes the identity of the network registration function device 205 and the encrypted service token request. In addition, the transaction request 261 and the transaction request 271 further include the identifier of the authorization contract that the network registration function device 205 requests to invoke. In some examples, after receiving the transaction proposal, the distributed management device 206 obtains a public key of the network registration function device 205 based on the certificate of the network registration function device 205, and then verifies validity of the transaction proposal by using the public key. If the verification succeeds, the distributed management device 206 sends the transaction proposal to the trusted environment device 207 to execute the authorization contract.

Correspondingly, the trusted environment device 207 receives (273) the transaction request 271 from the distributed management device 206. The trusted environment device 207 determines (275) the symmetric key between the network registration function device 205 and the trusted environment device 207 based on the identity of the network registration function device 205. After obtaining the symmetric key, the trusted environment device 207 decrypts (279) the encrypted service token request based on the symmetric key. Based on the service token request, the trusted environment device 207 determines (281) whether the first network function device provides the service requested by the second network function device 201. If the first network function device provides the service requested by the second network function device 201, the trusted environment device 207 generates (283) a service token for the second network function device 201.

In some embodiments, the service token may include the identity of the second network function device 201, the identity of the first network function device, a life cycle of the service token, or a signature algorithm of the trusted environment device 207.

In some embodiments, to determine whether the first network function device provides the service requested by the second network function device 201, the trusted environment device 207 may invoke the authorization contract based on the identifier of the authorization contract. The trusted environment device 207 may obtain the encrypted identity of the first network function device based on the identity of the first network function device. The trusted environment device 207 may determine the registration information of the first network function device based on the encrypted identity of the first network function device, to obtain the service supported by the first network function device. The trusted environment device 207 may determine whether the service supported by the first network function device includes the type of the service requested by the second network function device 201 from the first network function device.

In some embodiments, after generating the service token, the trusted environment device 207 may encrypt the service token by using the symmetric key and send an encrypted service token to the distributed management device 206. In addition, the token may be first signed by the trusted environment device 207 by using its private key, encrypted by using the symmetric key, and then sent to the distributed management device 206. Optionally, the trusted environment device 207 may encrypt a service access record and token generation record of the network function device, and return an encrypted service access record and token generation record to the distributed management device 206. Correspondingly, the distributed management device 206 may receive the encrypted service token from the trusted environment device 207, and send the encrypted service token to the network registration function device 205. The network registration function device 205 receives the encrypted service token from the distributed management device, and decrypts the encrypted service token by using the symmetric key. In addition, after receiving the service token, the network registration function device 205 sends collected transactions to an ordering service device according to the endorsement mechanism for ordering. The ordering service device broadcasts a block after the ordering. After receiving the block, the distributed management device performs transaction verification. If the verification succeeds, the distributed management device writes the block that includes an access request and the token generation record into the local ledger, and updates a global status.

Then, the network registration function device 205 sends a decrypted service token to the second network function device 201. Correspondingly, the second network function device may receive the decrypted service token from the network registration function device 205. The second network function device 201 determines, by using a public key of the trusted environment device 207, whether the decrypted service token is valid. If the service token is valid, the second network function device 201 sends a service request to the first network function device. The service request includes the identity of the second network function device 201, a type of the second network function device 201, the identity of the network to which the second network function device 201 belongs, the identity of the first network function device, the type of the first network function device, and the service token. In addition, the second network function device 201 may receive a service response message from the first network function device. For example, after receiving a service request message from cNF, pNF may verify the service token by using the public key of the trusted environment device. If the verification succeeds, pNF verifies a service request parameter of cNF. If the verification succeeds, pNF returns a service response message to cNF and provides the service. If the verification fails, a failure message is returned.

In this way, trust establishment between a plurality of operators' networks is simplified. Functions such as network function registration and access authorization are deployed on a blockchain network, and can be automatically executed with function trustworthiness ensured. In addition, a contract technology can implement rapid deployment and update of a system function. The trusted environment device implements secure storage and cross-domain sharing of network function information of an operator, and provides confidentiality and integrity protection for execution of a smart contract.

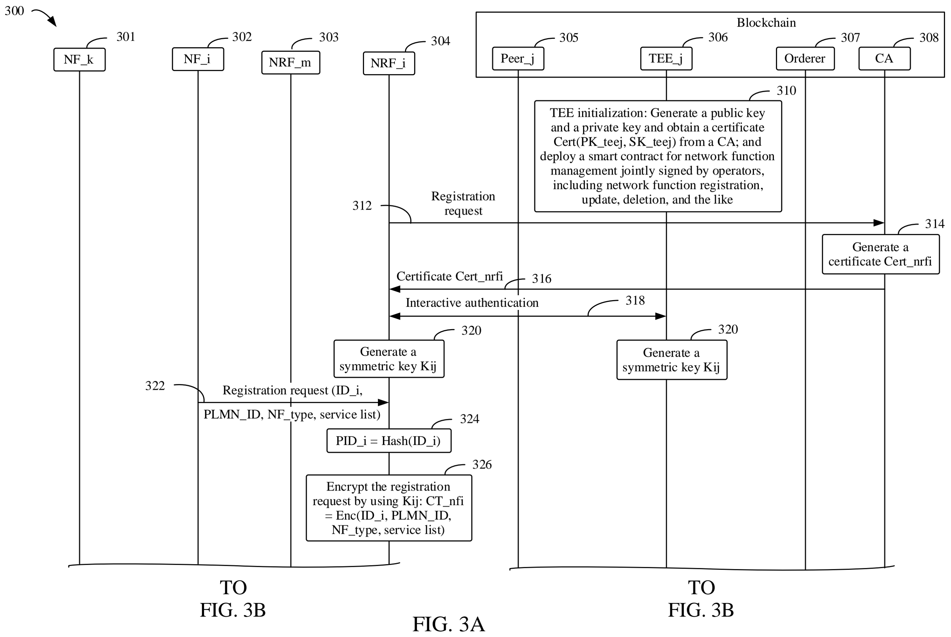

Further, for clarity of description, two specific implementations of service authorization are described with reference to FIG. 3A to FIG. 4B.

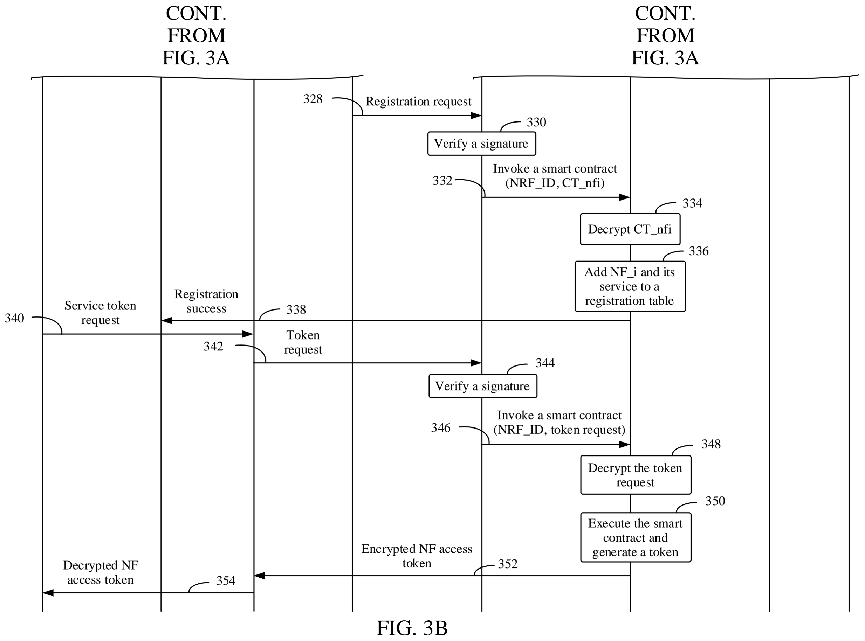

FIG. 3A and FIG. 3B show an example process of service authorization according to some embodiments of this application. The process may be considered as a specific implementation of service authorization in FIG. 2A to FIG. 2C. For clarity of description without any limitation, a process 300 is described with reference to FIG. 1A. In this implementation, the network function device 110 is implemented as NF_k 301, the network registration function device 120 is implemented as NRF_i 304, the network registration function device 130 is implemented as NRF_m 303, the distributed management device 140 and the distributed management device 150 are implemented as Peer_j 305, and the trusted environment device 160 and the trusted environment device 170 are implemented as TEE_j 306. It should be understood that Peer_j 305 may be two distributed management devices. For ease of description, FIG. 3A and FIG. 3B show only one distributed management device. Similarly, TEE_j 306 may be two trusted environment devices. For ease of description, FIG. 3A and FIG. 3B show only one trusted environment device.

The process 300 is a network function authorization framework implemented based on a consortium blockchain network and a TEE. In the process 300, after a blockchain system is started, TEE_j 306 performs (310) initialization by generating a public key and a private key and obtaining a certificate Cert(PK_tee_j, SK_tee_j) from a certificate authority CA. (PK_tee_j, SK_tee_j) is a public-private key pair generated by the CA for TEE_j 306. TEE_j 306 deploys a smart contract for network function management jointly signed by operators, including network function registration, update, deletion, and the like. Then, a network element of an operator starts to use the system for authorization management of the network element.

NRF_i 304 initiates (312) a registration request to the CA 308. The registration request provides an identity NRF_ID of NRF_i 304 and a public key and signature of NRF_i 304. The CA 308 generates (314) a certificate Cert_nrfi for NRF_i 304 and returns (316) the certificate Cert_nrfi of NRF_i to NRF_i 304. After receiving the certificate, NRF_i 304 performs interactive authentication with TEE_j 306 by using the certificate. After the authentication succeeds, NRF_i 304 and TEE_j 306 generate (320) a symmetric key Kij.

A network function network element NF_i 302 of an operator initiates (322) a registration request to a network registration network element NRF_i 304 of the operator. The registration request includes a network ID (PLMN_ID) of the operator, an identity ID_i of NF_i 302, a type NF_Type of NF_i 302, a list of services provided by NF_i 302, and the like. NRF_i 304 performs (324) hashing on the received identity ID_i of NF_i 302 to generate PID_i: [PID]_([NF]_i) = Hash([ID]_([NF]_i)). NRF_i 304 encrypts (326) the registration request by using the symmetric key Kij: CT_nfi = Enc(ID_i, PLMN_ID, NF_type, service list). NRF_i 304 sends (328) the registration request to a blockchain node Peer_j 305 by invoking the smart contract. The registration request includes the certificate Cert_nrfi of NRF_i 304, generated ciphertext CT_nfi, and a signature generated by using a private key corresponding to Cert_nrfi.

After receiving the registration request from NRF_i 304, Peer_j 305 verifies (330) the signature by using Cert_nrfi. After the verification succeeds, Peer_j 305 executes (332) the smart contract. Contract parameters include NRF_ID of NRF_i 304 and the ciphertext CT_nfi. TEE_j 306 queries and obtains the symmetric key Kij based on NRF _ID of NRF_i 304, and decrypts (334) CT_nfi. TEE_j 306 adds (336) NF_i 302 and its service list to a registration table. TEE_j 306 returns (338) a registration success message to NF_i 302 through entities such as Peer_j 305 and NRF_i 304.

A network function NF_k 301 from another operator sends (340) a service token request to a network registration function NRF_m 303 of the operator. The service token request includes identity information of NF_k 301, specifically including ID_k of NF_k 301, a type of NF_i 302, IDs PLMN_ID of networks to which NF_k 301 and NF_i 302 belong, and a type of a requested service.

NRF_m 303 generates a service request token based on the foregoing request, encrypts the token, and then sends (342) a token request to a blockchain node, for example, Peer_j 305. The token request includes a signature provided by NRF_m 303. The blockchain node Peer_j 305 verifies (344) the signature for the request. Peer_j 305 invokes (346) the smart contract deployed in TEE_j 306, and sends the received encrypted token request and NRF_ID of NRF_m 303 to TEE_j 306.

TEE_j 306 obtains a corresponding decryption key based on NRF_ID of NRF_m 303 and decrypts (348) the token request. TEE_j 306 executes (350) the smart contract and obtains an authorization token ofNF_k 301. TEE_j 306 returns (352) an encrypted access authorization token of NF_k 301 to NRF_m 303 through Peer_j 305. NRF_m 303 decrypts the token and sends (354) a decrypted token to the requester NF_k 301.

In the process 300, a consortium blockchain is used as a blockchain platform, to implement functions such as distributed registration and access authorization of a network function, and support cross-domain secure access to the network function. The trusted execution environment is used to implement secure storage and processing of network function registration information, and secure and trusted running of functions such as user registration and access authorization, to protect data privacy and system trustworthiness. The smart contract is used to implement automatic running of user registration and access authentication and authorization functions, to reduce communication overheads of a cross-domain operation between operators' networks. In this way, a service-based architecture is combined with the blockchain system, and the TEE is used to protect the smart contract with an authorization function, to ensure that the system is open, transparent, and auditable.

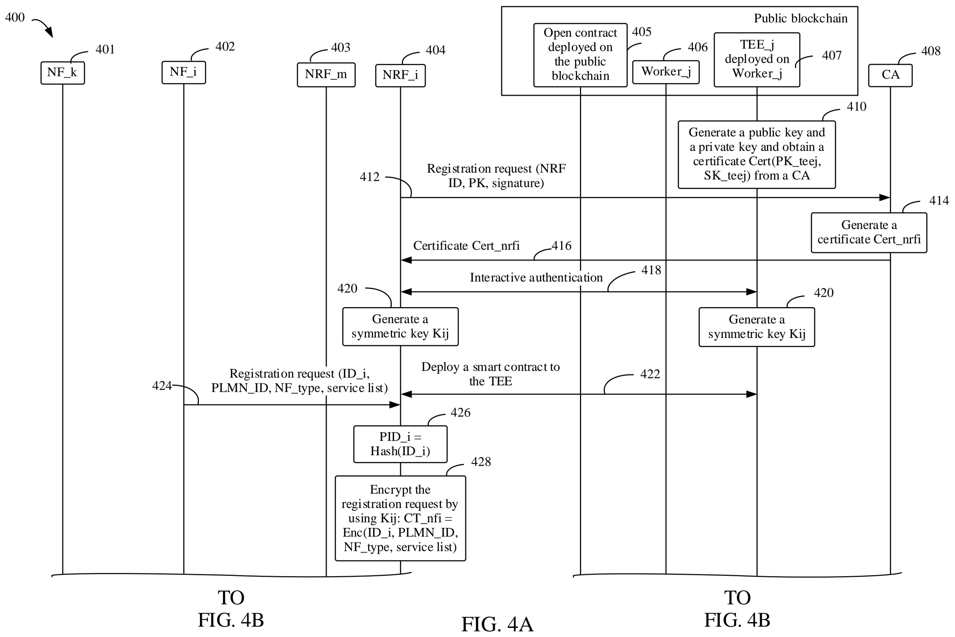

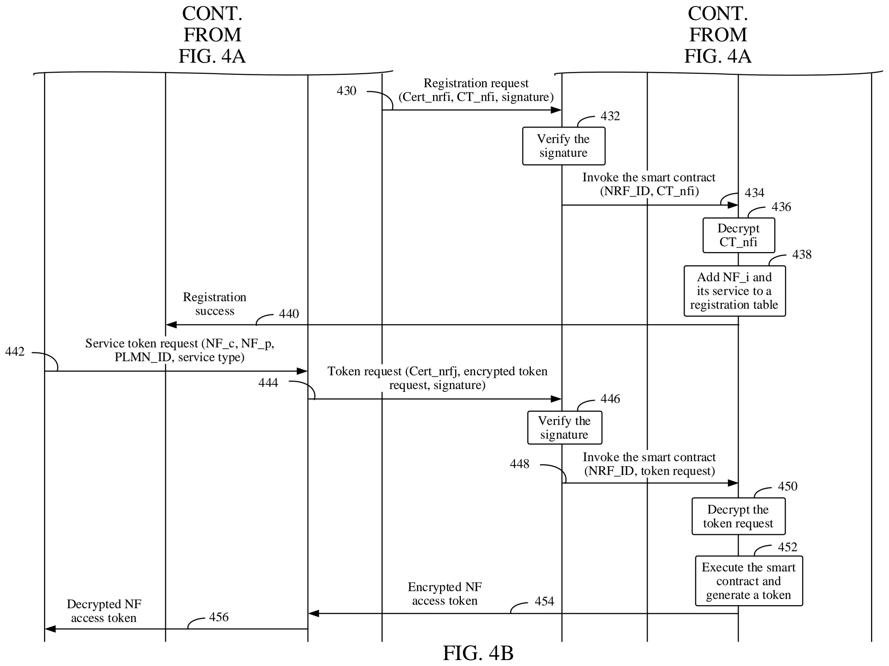

FIG. 4A and FIG. 4B show an example process of service authorization through a public blockchain structure. Different from the consortium blockchain used in the process 3, the public blockchain structure is used in a process 400. Therefore, an open smart contract needs to be deployed on a public blockchain. The smart contract invokes a smart contract in a TEE deployed on a worker or an oracle to generate an authorization token. The open contract (Open Contract) is deployed on the public blockchain (Ethereum). Anyone can invoke the open contract, which is equivalent to a list that records all workers and addresses of private smart contracts deployed on the workers, and sends a contract invocation request. The worker is a blockchain node and has a private contract in its TEE. The workers work together to build a distributed network. Adding a new worker requires mutual authentication and sharing of a session key.

In the process 400, after a blockchain system is started, TEE_j 406 performs (410) initialization by generating a public key and a private key and obtaining a certificate Cert(PK_tee_j, SK_tee_j) from a certificate authority CA. (PK_tee_j, SK_tee_j) is a public-private key pair generated by the CA for TEE_j 406.

NRF_i 404 initiates (412) a registration request to the CA 408. The registration request provides an identity NRF_ID of NRF_i 404 and a public key and signature of NRF_i 404. The CA 408 generates (414) a certificate Cert_nrfi for NRF_i 404 and returns (416) the certificate Cert_nrfi of NRF_i to NRF_i 404. After receiving the certificate, NRF_i 404 performs interactive authentication with TEE_j 407 by using the certificate. After the authentication succeeds, NRF_i 404 and TEE_j 406 generate (420) a symmetric key Kij. A smart contract is deployed (422) in TEE_j 406.

A network function network element NF_i 402 of an operator initiates (424) a registration request to a network registration network element NRF_i 404 of the operator. The registration request includes a network ID (PLMN_ID) of the operator, an identity ID_i of NF_i 402, a type NF_Type of NF_i 402, a list of services provided by NF_i 402, and the like. NRF_i 404 performs (426) hashing on the received identity ID_i of NF_i 402 to generate PID_i: [PID]_([NF]_i) = Hash([ID]_([NF]_i)). NRF_i 404 encrypts (428) the registration request by using the symmetric key Kij: CT_nfi = Enc(ID_i, PLMN_ID, NF_type, service list). NRF_i 404 sends (430) the registration request to the open contract 405. The registration request includes the certificate Cert_nrfi of NRF_i 404, generated ciphertext CT_nfi, and a signature generated by using a private key corresponding to Cert_nrfi.

After receiving the registration request from NRF_i 404, the open contract 405 verifies (432) the signature by using Cert_nrfi. After the verification succeeds, the open contract 405 invokes (434) the smart contract. Contract parameters include NRF_ID of NRF_i 404 and the ciphertext CT_nfi. TEE_j 407 deployed on Worker_j 406 queries and obtains the symmetric key Kij based on NRF_ID of NRF_i 404, and decrypts (436) CT_nfi. TEE_j 407 adds (438) NF_i 402 and its service list to a registration table. TEE_j 407 returns (440) a registration success message to NF_i 402 through entities such as the open contract 405 and NRF_i 404.

A network function NF_k 401 from another operator sends (442) a service token request to a network registration function NRF_m 403 of the operator. The service token request includes identity information of NF_k 401, specifically including ID_k of NF_k 401, a type of NF_i 402, IDs PLMN_ID of networks to which NF_k 401 and NF_i 402 belong, and a type of a requested service.

NRF_m 403 generates a service request token based on the foregoing request, encrypts the token, and then sends (444) a token request to the open contract 405. The token request includes a signature provided by NRF_m 403. The open contract 405 verifies (446) the signature for the request. The open contract 405 invokes (448) the smart contract, and sends the received encrypted token request and NRF _ID of NRF_m 403 to TEE_j 407.

TEE_j 407 obtains a corresponding decryption key based on NRF_ID of NRF_m 403 and decrypts (450) the token request. TEE_j 407 executes (452) the smart contract and obtains an authorization token of NF_k 401. TEE_j 407 returns (454) an encrypted access authorization token of NF_k 401 to NRF_m 403. NRF_m 403 decrypts the token and sends (456) a decrypted token to the requester NF_k 401.

In this way, the public blockchain is used as a blockchain platform in the process 400, to implement functions such as distributed registration and access authorization of a network function, and support cross-domain secure access to the network function.

Specifically, a service authorization process may include system initialization, trusted environment initialization, network function registration, service request authorization, and service access.

During system initialization, two mobile operators' networks, namely, a visited network vPLMN and a home network hPLMN, jointly initialize a blockchain network. The blockchain network includes a certificate authority CA, which is responsible for generating a basic parameter of a system, managing identities of all nodes in the system, and generating corresponding identity certificates (Credential) for the nodes. The certificates may be used for identity authentication, access authorization, and the like of the nodes in the system. Network function repository function nodes vNRF and hNRF in the two operators' core networks are registered with the certificate authority CA. The CA verifies identities of vNRF and hNRF, generates public-private key pairs ([PK]_vNRF, [SK]_vNRF) and ([PK]_hNRF, [SK]_hNRF) for vNRF and hNRF, and sends the public-private key pairs to vNRF and hNRF through a secure channel. The blockchain network includes two peer nodes [Peer]_1 and [Peer]_2, one ordering service node, and one confidential channel. vNRF and hNRF are respectively associated with the two peer nodes. The peer node is responsible for transaction endorsement, signature, and smart contract (chaincode) execution. The ordering service node is responsible for packaging a block for synchronization to a ledger. Two networks participating in authorization should belong to a same channel. That is, the peer node corresponding to vNRF and the peer node corresponding to hNRF perform authorization in the same channel.

During trusted computing environment initialization, [Peer]_1 and [Peer]_2 locally initialize enclaves (Enclaves) [TEE]_1 and [TEE]_2 respectively for deploying and securely executing smart contracts. [TEE]_i (i = 1, 2) generates a public-private key pair ([PK]_TEEi, [SK]_TEEi) according to a preset secure boot program. The public key [PK]_TEEi is disclosed to the other nodes in the system and used as a unique identifier of the enclave. vPLMN and hPLMN jointly formulate two smart contracts, namely, a network function registration contract (NF Registration Contract) and a network service request authorization contract (Request Authorization Contract), and deploy them in the enclaves. The two smart contracts respectively specify corresponding endorsement policies, and network function registration and network function access authorization, such as access token generation and the like.

vNRF and hNRF remotely authenticate the enclave [TEE]_i of the peer node, and if the authentication succeeds, negotiate a symmetric key with [TEE]_i as a session key [sk]_ij.

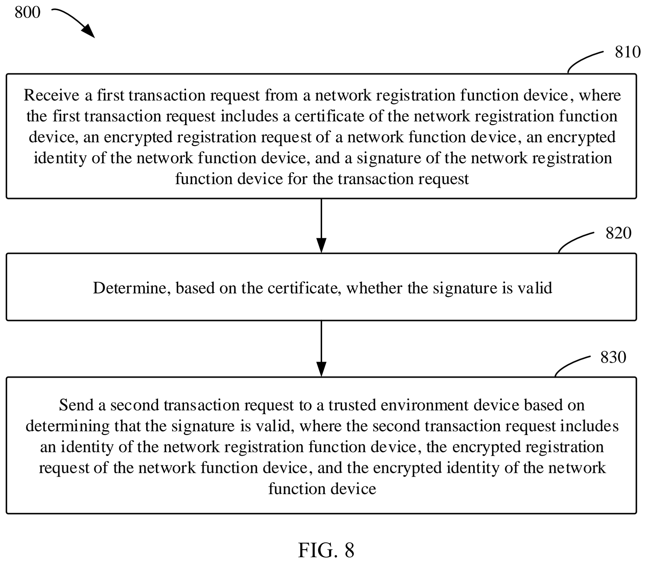

During network function registration, a network function [NF]_i in an operator's network sends a registration request NFRegister_Request to a network function repository function node [NRF]_i in the network. The request includes an instance identity [ID]_([NF]_i) of the network function [NF]_i, a type [Type]_([NF]_i) of the network function [NF]_i, an identity [ID]_PLMN of the network, an address [Addr]_([NF]_i) of the network function [NF]_i, a list [List]_([NSF]_i) = {[NFS]_i^1, [NFS]_i^2, ..., [NFS]_i^n} of network function services supported by the network function [NF]_i, and the like. A specific procedure is shown in FIG. 8.

After receiving the registration request, the network repository function node [NRF]_i verifies validity of [NF]_i, generates an identity credential, namely, a public-private key pair [PK]_([NF]_i)/[SK]_([NF]_i), for the valid network function, and sends the identity credential to [NF]_i through a secure channel. [NF]_i locally stores the identity credential.

The network repository function node [NRF]_i performs hashing on the instance identity [ID]_([NF]_i) of the network function [NF]_i to generate a hidden identity: [PID]_([NF]_i) = Hash([ID]_([NF]_i)); and encrypts user registration information by using the session key [sk]_ij: [ct]_([PID]_([NF]_i)) = Enc([sk]_ij, [[ID]_([NF]_i), [Type]_([NF]_i), [ID]_PLMN, [Addr]_([NF]_i), [List]_([NSF]_i)]). [NRF]_i sends a transaction proposal (Transaction Proposal) to an endorsement node Peer on a consortium blockchain according to an endorsement mechanism, to execute a user network function registration smart contract (NF Registration Contract). The transaction proposal includes an identity of the network repository function node [NRF]_i, the hidden identity [PID]_([NF]_i) of the network function [NF]_i, an ID of the invoked smart contract, encrypted registration information [ct]_([PID]_([NF]_i)), and a signature of [NRF]_i for the transaction proposal.

According to the endorsement mechanism, [Peer]_i that receives the transaction proposal first verifies validity of the proposal by using a public key of [NRF]_i. If the verification succeeds, the node [Peer]_j sends the transaction proposal to local [TEE]_i through a TEE dedicated interface. After receiving the transaction proposal, [TEE]_i decrypts the ciphertext [ct]_([PID]_([NF]_i)) by using the session key [sk]_ij between [TEE]_i and [NRF]_i, to obtain the registration information of [NF]_i. [TEE]_i invokes the network function registration smart contract, performs hashing (hash) on obtained [ID]_([NF]_i) to obtain a hidden identity [PID]_([NF]_i), compares the hidden identity with the hidden identity in the transaction proposal to determine the validity of the proposal, searches a local ledger based on [PID]_([NF]_i), and if no entry for [PID]_([NF]_i) is retrieved, creates a new key-value entry (Key-Value); or if an entry for [PID]_([NF]_i) is retrieved, updates a key value. The key is [PID]_([NF]_i). The value is [Seal]_([PID]_([NF]_i)). [Seal]_([PID]_([NF]_i)) = Enc([SealK]_i, [[ID]_([NF]_i), [Type]_([NF]_i), [ID]_PLMN, FQDN, [List]_([NSF]_i)]). [SealK]_i is an encapsulation key of the trusted computing environment [TEE]_i. If the creation or update is completed, a chaincode running status True and an encrypted key-value entry <Key, Value> = <[PID]_([NF]_i), [Seal]_([PID]_([NF]_i))> are returned.

The peer node generates a proposal response based on a result and output of executing the smart contract by [TEE]_i, and returns the proposal response to [NRF]_i. [NRF]_i submits, according to the endorsement mechanism, the collected proposal response to the ordering service node Orderer. The ordering service node performs global transaction ordering, generates a block, and broadcasts the block to all peer nodes for confirmation. If the confirmation succeeds, the peer node writes the block into the local ledger. At this point, registration and secure information storage of [NF]_i are completed.

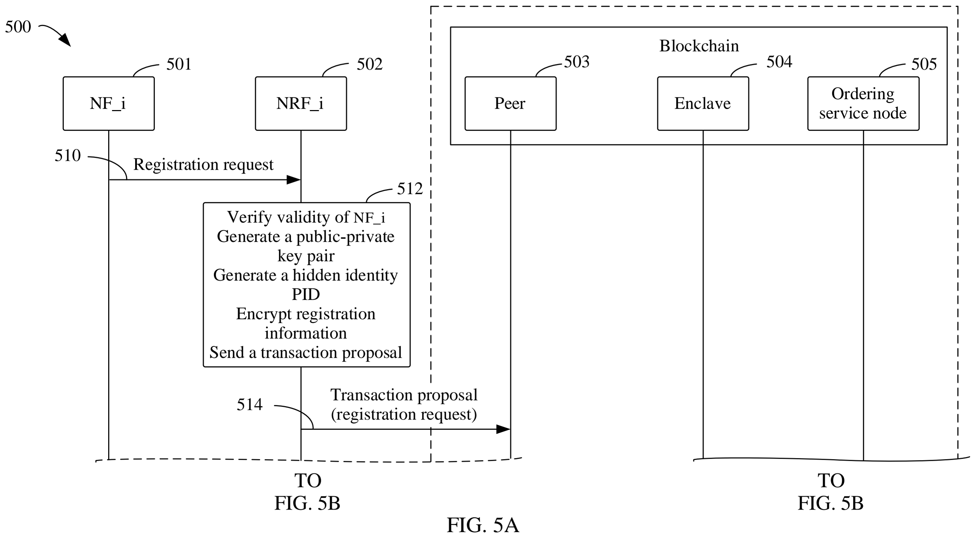

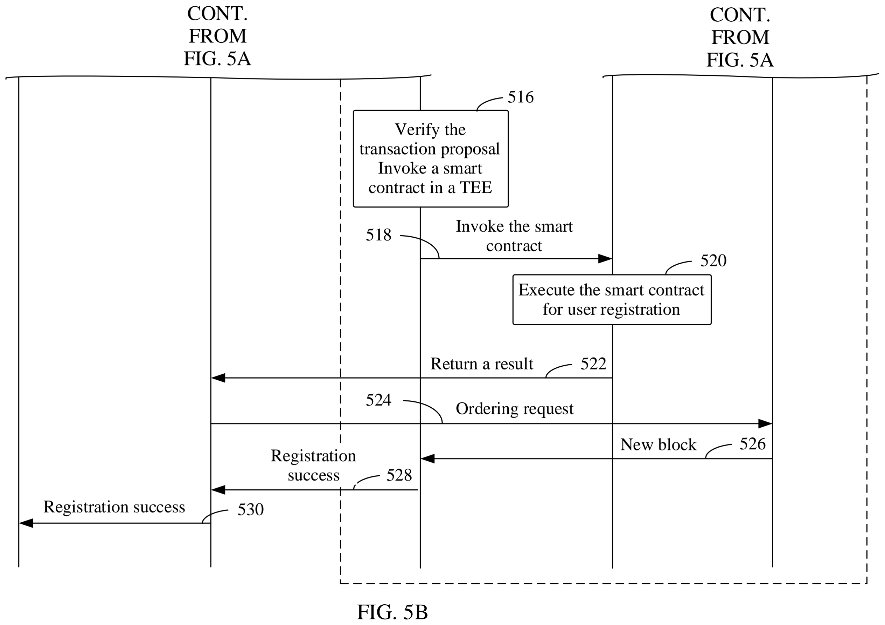

FIG. 5A and FIG. 5B show a network function registration process, which may be considered as a part of a specific implementation of service authorization in FIG. 2A to FIG. 2C. For clarity of description without any limitation, a process 500 is described with reference to FIG. 1A. In this implementation, the network registration function device 120 is implemented as NRF_i 502, the distributed management device 140 is implemented as Peer 503, and the trusted environment device 160 is implemented as an enclave 504.

In the process 500, NF_i 501 sends (510) a registration request to NRF_i 502. NRF_i 502 verifies (512) validity of NF_i 501 and generates a public-private key pair for NF_i 501. NRF_i 502 generates a hidden identity PID of NF_i 501 based on an identity of NF_i 501. NRF_i 502 encrypts registration information of NF_i 501 and sends (514) a transaction proposal to Peer 503. The transaction proposal includes the registration request of NF_i 501. Peer 503 verifies (516) the transaction proposal, and after the verification succeeds, invokes (518) a smart contract in the enclave 504. After receiving the transaction proposal, the enclave 504 executes (520) the smart contract for user registration. The enclave 504 returns (522) a registration result to NRF_i 502. After receiving the registration request, NRF_i 502 sends (524) an ordering request to an ordering service node 505. The ordering service node 505 performs global ordering, generates a new block, and broadcasts (526) the block to Peer 503. Peer 503 sends (528) a registration success message to NRF_i 502. NRF_i 502 returns (530) the registration success message to NF_i 501.

During service request authorization, a network function consumer cNF in vPLMN discovers, through a service discovery function, a network function service pNF provided by another network operator hPLMN. When cNF requests the service from the network function provider pNF in another network operator's network hPLMN for the first time, cNF needs to obtain an access token (Access Token). cNF first sends a token request message (AccessToken_Get_Request) to vNRF in vPLMN to which cNF belongs. The message includes an instance identity [ID]_cNF of cNF, an ID [ID]_vPLMN of a network to which cNF belongs, an identity [ID]_pNF of an expected service provider, and a type [Type]_pNF of an expected service NF, and an ID [ID]_hPLMN of a network to which pNF belongs. vNRF encrypts the token request message by using a session key [sk]_ij corresponding to a TEE, to generate a ciphertext message, packages the ciphertext message as a payload into a transaction proposal (Transaction proposal), and invokes a smart contract (Request Authorization Contract) deployed in the TEE. After signing the transaction proposal, vNRF sends the transaction proposal to a corresponding peer node according to an endorsement mechanism, to invoke the smart contract (Request Authorization Contract). The transaction proposal includes an identity [ID]_vNRF of a network repository function node, an ID of the invoked smart contract, encrypted token request information, and a signature of vNRF for the transaction proposal.

After receiving the transaction proposal, the peer node verifies validity of the transaction proposal by using a public key of vNRF. If the verification succeeds, the peer node sends the transaction proposal to the enclave, to execute the smart contract (Request Authorization Contract) in the TEE. The TEE first decrypts the token request message by using the session key [sk]_ij, to obtain the instance identity [ID]_cNF of cNF, the ID [ID]_vPLMN of the network to which cNF belongs, the identity [ID]_pNF of the expected service provider, the type [Type]_pNF of the expected service NF, and the ID [ID]_hPLMN of the network to which pNF belongs. Then, the TEE calculates a hidden identity of the expected service provider: [PID]_pNF = Hash([ID]_pNF); and searches a local ledger based on [PID]_pNF and extracts registration information <Key, Value> = <[PID]_(p[NF]_i), [Seal]_([PID]_pNF)> of pNF. The TEE decrypts [Seal]_([PID]_pNF), obtains a list of services supported by pNF, compares service request information of cNF with the list of services supported by pNF, and determines whether the consumer cNF can obtain the service provided by the provider pNF. If the service can be obtained, the TEE generates the access token for cNF. The access token defines attributes such as a signature algorithm, the service consumer cNF, the service producer pNF, and a life cycle of the token. The token is first signed by the TEE by using its private key [SK]_TEE, encrypted by using the session key [sk]_ij, and then sent to the peer node. In addition, the TEE encrypts a service access record and token generation record of cNF, and returns an encrypted service access record and token generation record of cNF to the peer node. The peer node generates a proposal response based on output of the TEE and returns the proposal response to vNRF. After receiving the transaction response, vNRF sends collected transactions to an ordering service according to the endorsement mechanism for ordering. The ordering service broadcasts a block after the ordering. After receiving the block, the peer node performs transaction verification. If the verification succeeds, the peer node writes the block that includes an access request and the token generation record into the local ledger, and updates a global status. In addition, the peer node sends the received token to vNRF. vNRF decrypts the token by using the session key [sk]_ij, and sends plaintext to cNF through a secure channel. cNF verifies validity of the token by using a public key [PK]_TEE of the TEE.

During service access, after receiving the access token, the consumer cNF sends an NF service request (NF Service Request) to pNF based on an address of pNF. The request includes the identity [ID]_cNF of cNF, a type [Type]_cNF of cNF, the ID [ID]_vPLMN of the network to which cNF belongs, the identity [ID]_pNF of pNF, the type [Type]_pNF of pNF, and the access token AccessToken. After receiving a service request message from cNF, pNF verifies the access token by using the public key [PK]_TEE of the TEE. If the verification succeeds, pNF verifies a service request parameter of cNF. If the verification succeeds, pNF returns a service response message to cNF and provides the service. If the verification fails, a failure message is returned.

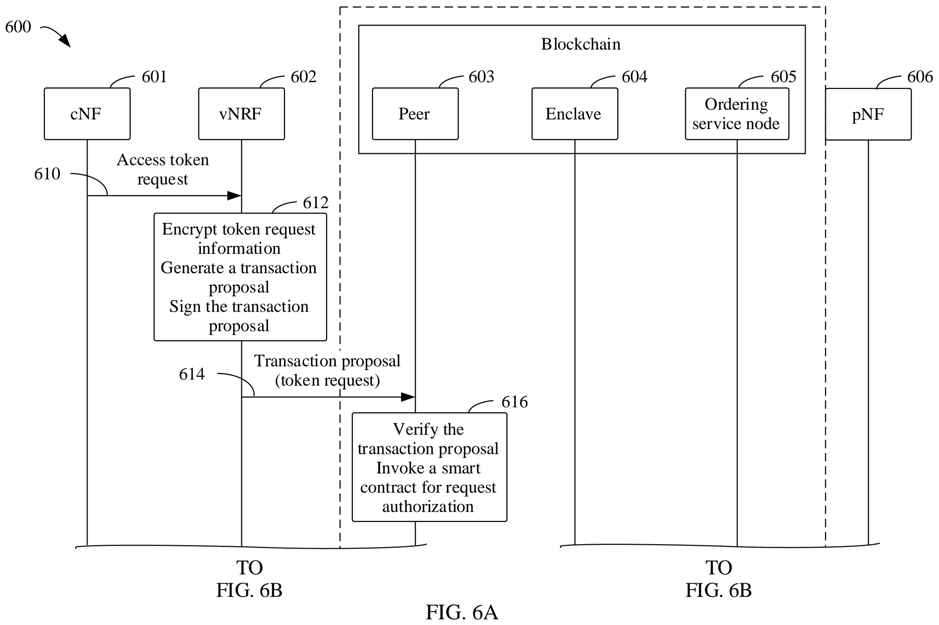

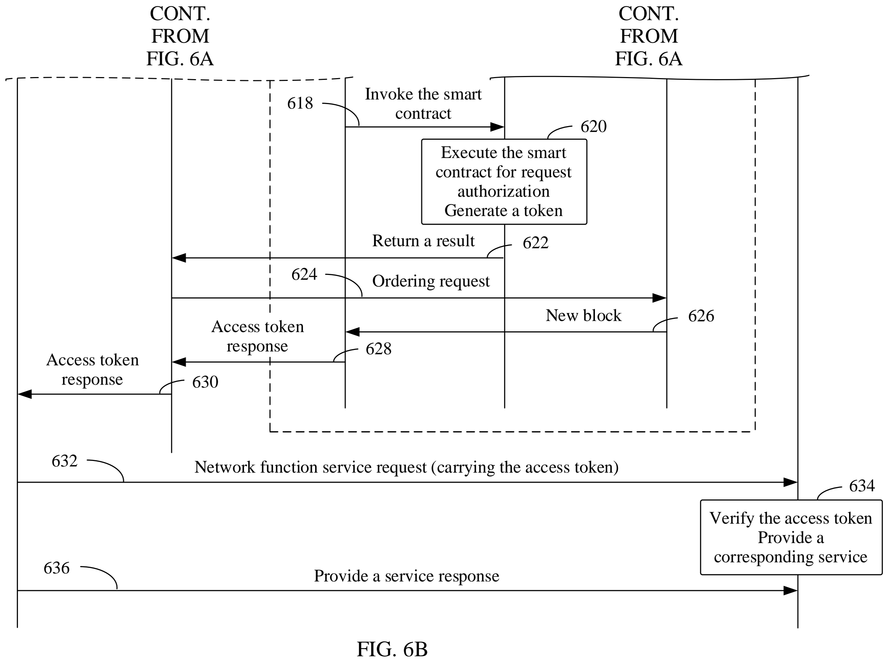

FIG. 6A and FIG. 6B show a process of token request authorization and network function service access, which may be considered as a part of a specific implementation of service authorization in FIG. 2A to FIG. 2C. For clarity of description without any limitation, a process 600 is described with reference to FIG. 1A. In this implementation, the network function device 110 is implemented as cNF 601, the network registration function device 130 is implemented as vNRF 602, the distributed management device 150 is implemented as Peer 603, and the trusted environment device 170 is implemented as an enclave 604.

In the process 600, cNF 601 sends (610) an access token request to vNRF 602. vNRF 602 encrypts (612) a token request message, generates a transaction proposal, and signs the transaction proposal. Then, vNRF 602 sends (614) the transaction proposal to Peer 603. The transaction proposal includes the token request of cNF 601. Peer 603 verifies (616) the transaction proposal, and after the verification succeeds, invokes (618) a smart contract in the enclave 604. After receiving the transaction proposal, the enclave 604 executes (620) the smart contract for request authorization. The enclave 604 returns (622) an authorization result to vNRF 602. After receiving the authorization result, vNRF 602 sends (624) an ordering request to an ordering service node 605. The ordering service node 605 performs global ordering, generates a new block, and broadcasts (66) the block to Peer 603. Peer 603 sends (628) an access token response to vNRF 602. vNRF 602 returns (630) the access token response to cNF 601. After obtaining an access token and determining that the access token is valid, cNF 601 may send (632), to pNF 606, a network function service request carrying the access token. pNF 606 verifies (634) the access token, and may provide a corresponding service for cNF 601 after determining that the access token is valid. pNF 606 further provides (636) a service response to cNF 601.

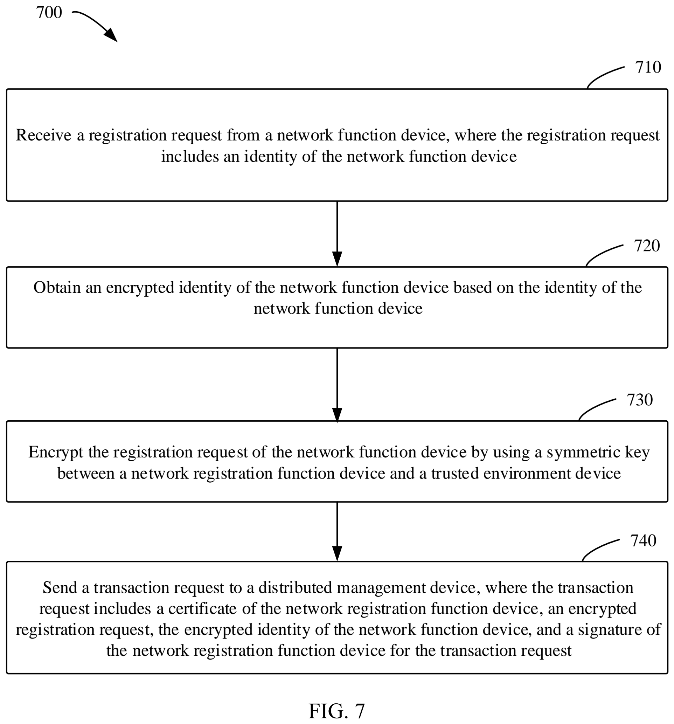

FIG. 7 is a schematic flowchart of a method 700 implemented by a network registration function device according to an embodiment of this application. For clarity of description without any limitation, a process 700 is described with reference to FIG. 1A. In a possible implementation, the method 700 may be implemented by the network registration function device 130 in the communication system 100A. In another possible implementation, the method 700 may alternatively be implemented by another communication device independent of the communication system 100A. As an example, the following describes the method 700 by using an example in which the method is implemented by the network registration function device 130 in the communication system 100A.

In a block 710, the network registration function device 130 receives a registration request from a network function device. The registration request includes an identity of the network function device. In a block 720, the network registration function device 130 obtains an encrypted identity of the network function device based on the identity of the network function device. In a block 730, the network registration function device 130 encrypts the registration request of the network function device by using a symmetric key between the network registration function device 130 and a trusted environment device. In a block 740, the network registration function device 130 sends a transaction request to a distributed management device. The transaction request includes a certificate of the network registration function device 130, an encrypted registration request, the encrypted identity of the network function device, and a signature of the network registration function device 130 for the transaction request.

In some embodiments, the registration request may further include a type of the network function device, an identity of a network to which the network function device belongs, an address of the network function device, a service supported by the network function device, or one or more of the foregoing. In some embodiments, the transaction request may further include an identifier of a registration contract that the network registration function device 130 requests to invoke.

In some embodiments, the network registration function device 130 may further generate an identity credential for the network function device based on determining that the network function device is valid, and send the identity credential to the network function device.

In some embodiments, the registration request received from the network function device may be a first registration request. The network registration function device 130 may further send a second registration request to an authentication device and receive the certificate of the network registration function device 130 from the authentication device. The second registration request includes an identity of the network registration function device 130 and a signature of the network registration function device 130.

In some embodiments, the network registration function device 130 may further perform interactive authentication with the trusted environment device by using the certificate, and generate the symmetric key between the network registration function device and the trusted environment device.

In some embodiments, the network registration function device 130 may further receive a registration success message from the distributed management device, and send the registration success message to the network function device.

In this way, the registration request of the network function device can be securely transmitted to a blockchain network, to implement distributed authentication and information sharing of a network service function.

FIG. 8 is a schematic flowchart of a method 800 implemented by a distributed management device according to an embodiment of this application. For clarity of description without any limitation, a process 800 is described with reference to FIG. 1A. In a possible implementation, the method 800 may be implemented by the distributed management device 150 in the communication system 100A. In another possible implementation, the method 800 may alternatively be implemented by another communication device independent of the communication system 100A. As an example, the following describes the method 800 by using an example in which the method is implemented by the distributed management device 150 in the communication system 100A.

In a block 810, the distributed management device 150 receives a first transaction request from a network registration function device. The first transaction request includes a certificate of the network registration function device, an encrypted registration request of a network function device, an encrypted identity of the network function device, and a signature of the network registration function device for the transaction request. In a block 820, the distributed management device 150 determines, based on the certificate, whether the signature is valid. In a block 830, the distributed management device 150 sends a second transaction request to a trusted environment device based on determining that the signature is valid. The second transaction request includes an identity of the network registration function device, the encrypted registration request of the network function device, and the encrypted identity of the network function device.

In some embodiments, the distributed management device 150 may further receive a registration success message of the network function device from the trusted environment device, and send the registration success message to the network registration function device.

In this way, the distributed management device can verify validity of a transaction request and send the transaction request to a trusted environment for processing, to ensure transaction security.

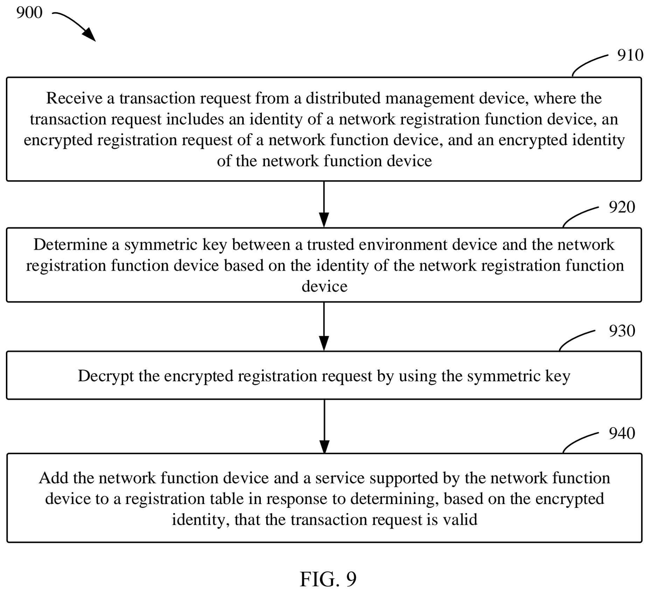

FIG. 9 is a schematic flowchart of a method 900 implemented by a trusted environment device according to an embodiment of this application. For clarity of description without any limitation, a process 900 is described with reference to FIG. 1A. In a possible implementation, the method 900 may be implemented by the trusted environment device 170 in the communication system 100A. In another possible implementation, the method 900 may alternatively be implemented by another communication device independent of the communication system 100A. As an example, the following describes the method 900 by using an example in which the method is implemented by the trusted environment device 170 in the communication system 100A.

In a block 910, the trusted environment device 170 receives a transaction request from a distributed management device. The transaction request includes an identity of a network registration function device, an encrypted registration request of a network function device, and an encrypted identity of the network function device. In a block 920, the trusted environment device 170 determines a symmetric key between the trusted environment device and the network registration function device based on the identity of the network registration function device. In a block 930, the trusted environment device 170 decrypts the encrypted registration request by using the symmetric key. In a block 940, the trusted environment device 170 adds the network function device and a service supported by the network function device to a registration table in response to determining, based on the encrypted identity, that the transaction request is valid.

In some embodiments, the transaction request may further include an identifier of a registration contract that the network registration function device requests to invoke and a signature of the network registration function device for the transaction request.

In some embodiments, the registration request may include an identity of the network function device, a type of the network function device, an identity of a network to which the network function device belongs, an address of the network function device, the service supported by the network function device, or one or more of the foregoing.

In some embodiments, the encrypted identity of the network function device included in the transaction request may be a first encrypted identity, and the trusted environment device 170 may further invoke the registration contract based on the identifier of the registration contract. The trusted environment device 170 may obtain a second encrypted identity of the network function device based on the identity of the network function device. The trusted environment device 170 may determine, based on determining that the first encrypted identity is the same as the second encrypted identity, that the transaction request is valid.

In some embodiments, the trusted environment device 170 may further send a registration success message of the network function device to the distributed management device.

In this way, a hardware-level secure isolated environment is constructed on a blockchain. In the secure environment, a network function registration function securely operates and network function data is securely stored and shared.

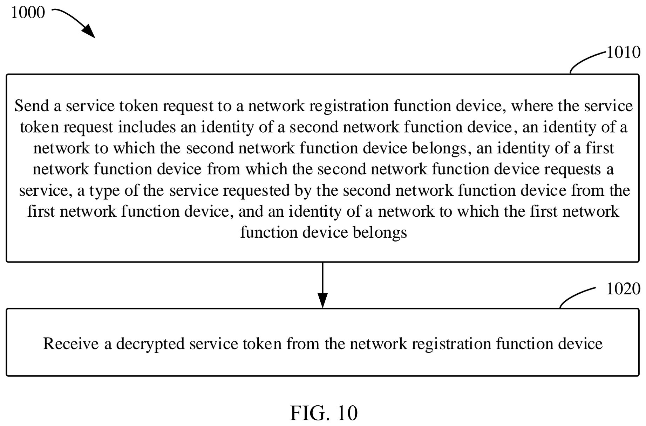

FIG. 10 is a schematic flowchart of a method 1000 implemented by a second network function device according to an embodiment of this application. For clarity of description without any limitation, a process 1000 is described with reference to FIG. 1A. In a possible implementation, the method 1000 may be implemented by the network function device 120 in the communication system 100A. In another possible implementation, the method 1000 may alternatively be implemented by another communication device independent of the communication system 100A. As an example, the following describes the method 1000 by using an example in which the method is implemented by the network function device 120 in the communication system 100A.

In a block 1010, the second network function device 120 sends a service token request to a network registration function device. The service token request includes an identity of the second network function device, an identity of a network to which the second network function device belongs, an identity of a first network function device from which the second network function device requests a service, a type of the service requested by the second network function device from the first network function device, and an identity of a network to which the first network function device belongs. In a block 1020, the second network function device 120 receives a decrypted service token from the network registration function device.

In some embodiments, the second network function device 120 may further determine, by using a public key of a trusted environment device, whether the decrypted service token is valid. The second network function device 120 may send a service request to the first network function device based on determining that the service token is valid. The service request may include the identity of the second network function device, a type of the second network function device, the identity of the network to which the second network function device belongs, the identity of the first network function device, a type of the first network function device, and the service token. The second network function device 120 may receive a service response message from the first network function device.

In this way, the second network function device can request, from a blockchain network, a service provided by another network function device, to simplify interaction.

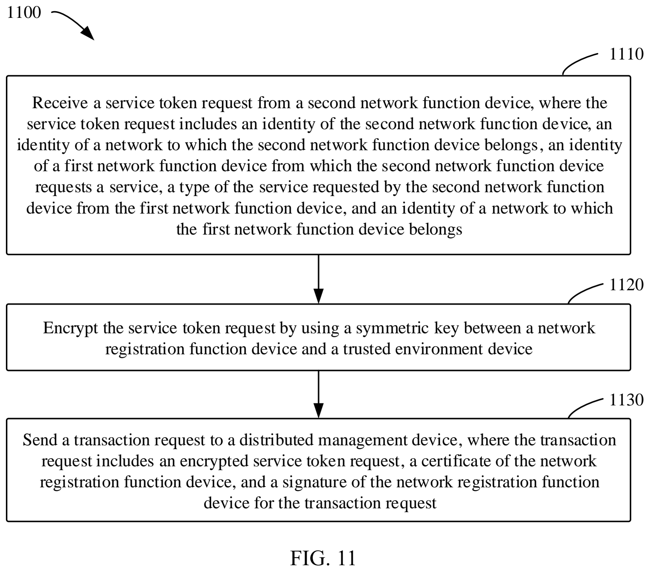

FIG. 11 is a schematic flowchart of a method 1100 implemented by the network registration function device 120 according to an embodiment of this application. For clarity of description without any limitation, a process 1100 is described with reference to FIG. 1A. In a possible implementation, the method 1100 may be implemented by the network registration function device 120 in the communication system 100A. In another possible implementation, the method 1100 may alternatively be implemented by another communication device independent of the communication system 100A. As an example, the following describes the method 1100 by using an example in which the method is implemented by the network registration function device 120 in the communication system 100A.

In a block 1110, the network registration function device 120 receives a service token request from a second network function device. The service token request includes an identity of the second network function device, an identity of a network to which the second network function device belongs, an identity of a first network function device from which the second network function device requests a service, a type of the service requested by the second network function device from the first network function device, and an identity of a network to which the first network function device belongs. In a block 1120, the network registration function device 120 encrypts the service token request by using a symmetric key between the network registration function device 120 and a trusted environment device. In a block 1130, the network registration function device 120 sends a transaction request to a distributed management device. The transaction request includes an encrypted service token request, a certificate of the network registration function device 120, and a signature of the network registration function device 120 for the transaction request.

In some embodiments, the transaction request may further include an identifier of an authorization contract that the network registration function device 120 requests to invoke.

In some embodiments, the network registration function device 120 may further receive an encrypted service token from the distributed management device, and decrypt the encrypted service token by using the symmetric key. Then, the network registration function device 120 sends a decrypted service token to the network function device.

In this way, the service token request of the network function device can be securely transmitted to a blockchain network.

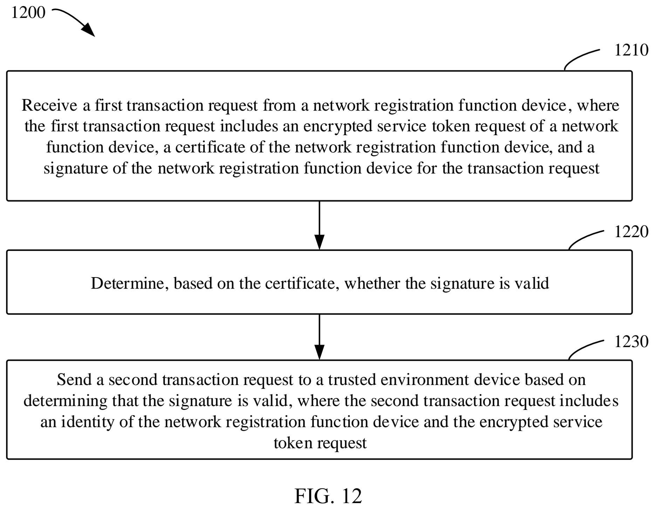

FIG. 12 is a schematic flowchart of a method 1200 implemented by the distributed management device 140 according to an embodiment of this application. For clarity of description without any limitation, a process 1200 is described with reference to FIG. 1A. In a possible implementation, the method 1200 may be implemented by the distributed management device 140 in the communication system 100A. In another possible implementation, the method 1200 may alternatively be implemented by another communication device independent of the communication system 100A. As an example, the following describes the method 1200 by using an example in which the method is implemented by the distributed management device 140 in the communication system 100A.

In a block 1210, the distributed management device 140 receives a first transaction request from a network registration function device. The first transaction request includes an encrypted service token request of a network function device, a certificate of the network registration function device, and a signature of the network registration function device for the transaction request. In a block 1220, the distributed management device 140 determines, based on the certificate, whether the signature is valid. In a block 1230, the distributed management device 140 sends a second transaction request to a trusted environment device based on determining that the signature is valid. The second transaction request includes an identity of the network registration function device and the encrypted service token request.

In some embodiments, the first transaction request and the second transaction request may further include an identifier of an authorization contract that the network registration function device requests to invoke.

In some embodiments, the distributed management device 140 may further receive an encrypted service token from the trusted environment device. Then, the distributed management device 140 may send the encrypted service token to the network registration function device.

In this way, the transaction request can be securely processed in a trusted environment, to implement secure authorization of the network function device.

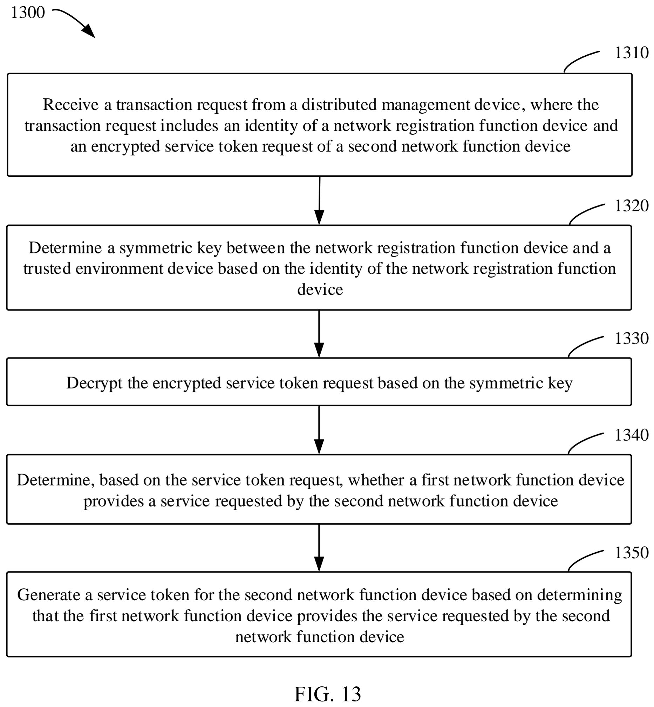

FIG. 13 is a schematic flowchart of a method 1300 implemented by the trusted environment device 160 according to an embodiment of this application. For clarity of description without any limitation, a process 1300 is described with reference to FIG. 1A. In a possible implementation, the method 1300 may be implemented by the trusted environment device 160 in the communication system 100A. In another possible implementation, the method 1300 may alternatively be implemented by another communication device independent of the communication system 100A. As an example, the following describes the method 1300 by using an example in which the method is implemented by the trusted environment device 160 in the communication system 100A.

In a block 1310, the trusted environment device 160 receives a transaction request from a distributed management device. The transaction request includes an identity of a network registration function device and an encrypted service token request of a second network function device. In a block 1320, the trusted environment device 160 determines a symmetric key between the network registration function device and the trusted environment device 160 based on the identity of the network registration function device. In a block 1330, the trusted environment device 160 decrypts the encrypted service token request based on the symmetric key. In a block 1340, the trusted environment device 160 determines, based on the service token request, whether a first network function device provides a service requested by the second network function device. In a block 1350, the trusted environment device 160 generates a service token for the second network function device based on determining that the first network function device provides the service requested by the second network function device.

In some embodiments, the transaction request may further include an identifier of an authorization contract that the network registration function device requests to invoke. In some embodiments, the service token request may include an identity of the second network function device, an identity of a network to which the second network function device belongs, an identity of the first network function device from which the second network function device requests the service, a type of the service requested by the second network function device from the first network function device, an identity of a network to which the first network function device belongs, or one or more of the foregoing.

In some embodiments, the service token may include the identity of the second network function device, the identity of the first network function device, a life cycle of the service token, a signature algorithm of the trusted environment device, or one or more of the foregoing.

In some embodiments, to determine whether the first network function device provides the service requested by the second network function device, the trusted environment device 160 may invoke the authorization contract based on the identifier of the authorization contract. The trusted environment device 160 may obtain an encrypted identity of the first network function device based on the identity of the first network function device. The trusted environment device 160 may determine registration information of the first network function device based on the encrypted identity of the first network function device, to obtain a service supported by the first network function device, and determine whether the service supported by the first network function device includes the type of the service requested by the second network function device from the first network function device.

In some embodiments, the trusted environment device 160 may further encrypt the service token by using the symmetric key and send an encrypted service token to the distributed management device.

In this way, a hardware-level secure isolated environment is constructed on a blockchain. In the secure environment, a network access authentication and authorization function securely operates and network function data is securely stored and shared.

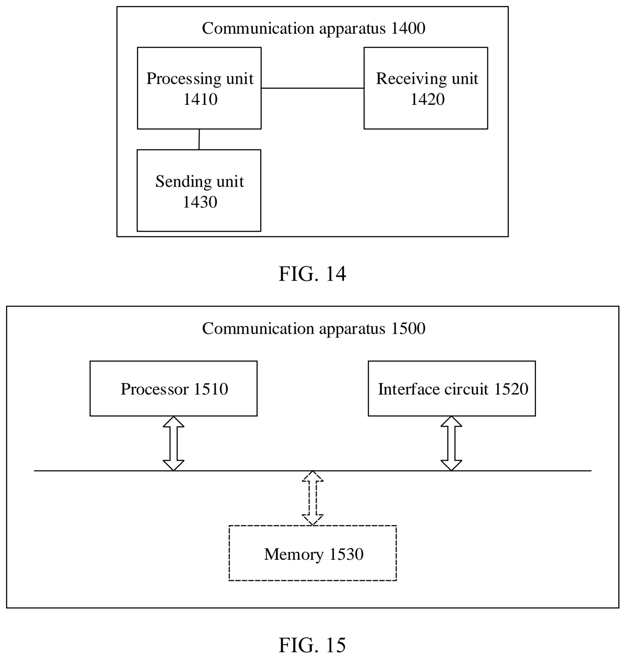

FIG. 14 is a diagram of a structure of a possible communication apparatus according to an embodiment of this application. The communication apparatus may implement functions of a terminal apparatus or a network apparatus in the foregoing method embodiments. Therefore, beneficial effects of the foregoing method embodiments can also be implemented. In this embodiment of this application, the communication apparatus may be the network function device 110, the network registration function device 120, the network registration function device 130, the distributed management device 140, the distributed management device 150, the trusted environment device 160, and the trusted environment device 170 shown in FIG. 1A, or may be a module (for example, a chip) used in the network function device 110, the network registration function device 120, the network registration function device 130, the distributed management device 140, the distributed management device 150, the trusted environment device 160, and the trusted environment device 170.

As shown in FIG. 14, the communication apparatus 1400 includes a processing unit 1410, a receiving unit 1420, and a sending unit 1430. The communication apparatus may be configured to implement functions of the network function device, the network registration function device, the distributed management device, or the trusted environment device in the method embodiment shown in any one of FIG. 2A to FIG. 13. In some embodiments, the processing unit may be a processor, the sending unit may be a transmitter, and the receiving unit may be a receiver.

As shown in FIG. 15, a communication apparatus 1500 includes a processor 1510 and an interface circuit 1520. The processor 1510 and the interface circuit 1520 are coupled to each other. It may be understood that the interface circuit 1520 may be a transceiver or an input/output interface. Optionally, the communication apparatus 1500 may further include a memory 1530, configured to store instructions executed by the processor 1510, store input data that the processor 1510 needs to run instructions, or store data generated after the processor 1510 runs instructions.

When the communication apparatus 1500 is configured to implement the methods in the foregoing method embodiments, the processor 1510 is configured to perform a function of the processing unit 1410, and the interface circuit 1520 is configured to perform functions of the receiving unit 1420 and the sending unit 1430.

When the communication apparatus is a chip used in the network function device 110, the network registration function device 120, the network registration function device 130, the distributed management device 140, the distributed management device 150, the trusted environment device 160, and the trusted environment device 170, the device chip implements functions of the network function device 110, the network registration function device 120, the network registration function device 130, the distributed management device 140, the distributed management device 150, the trusted environment device 160, and the trusted environment device 170 in the foregoing method embodiments. The device chip receives information from another module (for example, a radio frequency module or an antenna) in the network function device 110, the network registration function device 120, the network registration function device 130, the distributed management device 140, the distributed management device 150, the trusted environment device 160, and the trusted environment device 170. The information may be sent by another network function device 110, network registration function device 120, network registration function device 130, distributed management device 140, distributed management device 150, trusted environment device 160, and trusted environment device 170. Alternatively, the device chip sends information to another module (for example, a radio frequency module or an antenna) in the network function device 110, the network registration function device 120, the network registration function device 130, the distributed management device 140, the distributed management device 150, the trusted environment device 160, and the trusted environment device 170. The information is sent to another network function device 110, network registration function device 120, network registration function device 130, distributed management device 140, distributed management device 150, trusted environment device 160, and trusted environment device 170.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, any regular processor, or the like.

An embodiment of this application provides a communication system. The communication system may include the communication apparatus in the embodiment shown in FIG. 14, such as the network function device 110, the network registration function device 120, the network registration function device 130, the distributed management device 140, the distributed management device 150, the trusted environment device 160, and the trusted environment device 170. Optionally, a terminal device 110, an access and mobility management device 140, a session management device 150, a control and management device 160, and an application node discovery device 170 in the communication system may perform the communication method shown in any one of FIG. 2A to FIG. 13.

An embodiment of this application further provides a circuit. The circuit may be coupled to a memory and configured to perform procedures related to the network function device 110, the network registration function device 120, the network registration function device 130, the distributed management device 140, the distributed management device 150, the trusted environment device 160, and the trusted environment device 170 in any one of the foregoing method embodiments. The chip system may include the chip, and may further include another component such as a memory or a transceiver.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and module, refer to a corresponding process in the foregoing method embodiments. Details are not described herein again.

In several embodiments provided by this application, it should be understood that the disclosed communication method and apparatus may be implemented in other manners. For example, the described apparatus embodiments are merely examples. For example, the module division is merely logical function division and may be other division in actual implementation. For example, a plurality of modules or components may be combined or integrated into another system, or some features may be ignored or not performed. In addition, the displayed or described mutual couplings or direct couplings or communication connections may be implemented by using some interfaces. The indirect couplings or communication connections between the apparatuses or units may be implemented in electronic, mechanical, or other forms.

The modules described as separate parts may or may not be physically separate, and parts displayed as modules may or may not be physical modules, may be located in one position, or may be distributed on a plurality of network units. Some or all of the units may be selected based on actual requirements to achieve the objectives of the solutions of embodiments.

In addition, functional modules in embodiments of this application may be integrated into one processing module, or each of the modules may exist alone physically, or two or more modules are integrated into one module.

When the functions are implemented in a form of a software functional module and sold or used as an independent product, the functions may be stored in a computer-readable storage medium. Based on such an understanding, the technical solutions of this application essentially, or the part making a contribution, or some of the technical solutions may be implemented in a form of a software product. The computer software product is stored in a storage medium and includes instructions for instructing a computer device (which may be a personal computer, a server, a network device, or the like) to perform all or some of the steps of the methods described in embodiments of this application. The computer-readable storage medium may be any usable medium that can be accessed by a computer. The following provides an example but does not impose a limitation: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, or another optical disc storage or a disk storage medium, or another magnetic storage device, or any other medium that can carry or store expected program code in a form of an instruction or a data structure and can be accessed by a computer.

As used in this specification, the term "include" and similar terms thereof should be understood as open inclusion, that is, "include but not limited to". The term "based on" should be understood as "at least partially based on". The term "one embodiment" or "this embodiment" should be understood as "at least one embodiment". Terms such as "first", "second", and the like may indicate different objects or a same object, and are merely used to distinguish between indicated objects, but do not imply a specific spatial order, a time order, an importance order, or the like of the indicated objects. In some embodiments, a value, a process, a selected item, a determined item, a device, an apparatus, a means, a part, a component, or the like is referred to as "optimal", "lowest", "highest", "minimum", "maximum", or the like. It should be understood that such a description is intended to indicate that a selection may be made among many available functional selections, and that such a selection does not need to be better, lower, higher, smaller, larger, or otherwise preferred than other selections in other aspects or in all aspects. As used in this specification, the term "determining" may cover a variety of actions. For example, "determining" may include operating, calculation, processing, export, investigation, lookup (for example, lookup in a table, a database, or another data structure), finding, and the like. In addition, "determining" may include receiving (for example, receiving information), accessing (for example, accessing data in a memory), and the like. In addition, "determining" may include parsing, selection, choice, establishment, and the like.

The foregoing descriptions are merely specific implementations of this application, and are not intended to limit the protection scope of embodiments of this application. Any variation or replacement that a person skilled in the art can easily figure out within the technical scope disclosed in embodiments of this application shall fall within the protection scope of embodiments of this application. Therefore, the protection scope of embodiments of this application should be subject to the protection scope of the claims.

## Claims

1. A communication method, comprising:
receiving, by a network registration function device, a registration request from a network function device, wherein the registration request comprises an identity of the network function device;
obtaining an encrypted identity of the network function device based on the identity of the network function device;
encrypting the registration request of the network function device by using a symmetric key between the network registration function device and a trusted environment device; and
sending a transaction request to a distributed management device, wherein the transaction request comprises a certificate of the network registration function device, an encrypted registration request, the encrypted identity of the network function device, and a signature of the network registration function device for the transaction request.

2. The method according to claim 1, wherein the registration request further comprises at least one of the following:
a type of the network function device;
an identity of a network to which the network function device belongs;
an address of the network function device; or
a service supported by the network function device.

3. The method according to claim 1, wherein the transaction request further comprises an identifier of a registration contract that the network registration function device requests to invoke.

4. The method according to any one of claims 1 to 3, further comprising:
generating an identity credential for the network function device based on determining that the network function device is valid; and
sending the identity credential to the network function device.

5. The method according to any one of claims 1 to 4, wherein the registration request received from the network function device is a first registration request, and the method further comprises:
sending a second registration request to an authentication device, wherein the second registration request comprises an identity of the network registration function device and a signature of the network registration function device; and
receiving the certificate of the network registration function device from the authentication device.

6. The method according to claim 5, further comprising:
performing interactive authentication with the trusted environment device by using the certificate; and
generating the symmetric key between the network registration function device and the trusted environment device.

7. The method according to any one of claims 1 to 6, further comprising:
receiving a registration success message from the distributed management device; and
sending the registration success message to the network function device.

8. A communication method, comprising:
receiving, by a distributed management device, a first transaction request from a network registration function device, wherein the first transaction request comprises a certificate of the network registration function device, an encrypted registration request of a network function device, an encrypted identity of the network function device, and a signature of the network registration function device for the transaction request;
determining, based on the certificate, whether the signature is valid; and
sending a second transaction request to a trusted environment device based on determining that the signature is valid, wherein the second transaction request comprises an identity of the network registration function device, the encrypted registration request of the network function device, and the encrypted identity of the network function device.

9. The method according to claim 8, wherein the first transaction request and the second transaction request further comprise an identifier of a registration contract that the network registration function device requests to invoke.

10. The method according to claim 8 or 9, further comprising:
receiving a registration success message of the network function device from the trusted environment device; and
sending the registration success message to the network registration function device.

11. A communication method, comprising:
receiving, by a trusted environment device, a transaction request from a distributed management device, wherein the transaction request comprises an identity of the network registration function device, an encrypted registration request of a network function device, and an encrypted identity of the network function device;
determining a symmetric key between the trusted environment device and the network registration function device based on the identity of the network registration function device;
decrypting the encrypted registration request by using the symmetric key; and
adding the network function device and a service supported by the network function device to a registration table in response to determining, based on the encrypted identity, that the transaction request is valid.

12. The method according to claim 11, wherein the transaction request further comprises an identifier of a registration contract that the network registration function device requests to invoke and a signature of the network registration function device for the transaction request.

13. The method according to claim 11, wherein the registration request comprises at least one of the following:
an identity of the network function device;
a type of the network function device;
an identity of a network to which the network function device belongs;
an address of the network function device; or
the service supported by the network function device.

14. The method according to any one of claims 11 to 13, wherein the encrypted identity of the network function device comprised in the transaction request is a first encrypted identity, and the method further comprises:
invoking the registration contract based on the identifier of the registration contract;
obtaining a second encrypted identity of the network function device based on the identity of the network function device; and
determining, based on determining that the first encrypted identity is the same as the second encrypted identity, that the transaction request is valid.

15. The method according to any one of claims 11 to 14, further comprising:
sending a registration success message of the network function device to the distributed management device.

16. A communication method, comprising:
sending, by a second network function device, a service token request to a network registration function device, wherein the service token request comprises an identity of the second network function device, an identity of a network to which the second network function device belongs, an identity of a first network function device from which the second network function device requests a service, a type of the service requested by the second network function device from the first network function device, and an identity of a network to which the first network function device belongs; and
receiving a decrypted service token from the network registration function device.

17. The method according to claim 16, further comprising:
determining, by using a public key of a trusted environment device, whether the decrypted service token is valid;
sending a service request to the first network function device based on determining that the service token is valid, wherein the service request comprises the identity of the second network function device, a type of the second network function device, the identity of the network to which the second network function device belongs, the identity of the first network function device, a type of the first network function device, and the service token; and
receiving a service response message from the first network function device.

18. A communication method, comprising:
receiving, by a network registration function device, a service token request from a second network function device, wherein the service token request comprises an identity of the second network function device, an identity of a network to which the second network function device belongs, an identity of a first network function device from which the second network function device requests a service, a type of the service requested by the second network function device from the first network function device, and an identity of a network to which the first network function device belongs;
encrypting the service token request by using a symmetric key between the network registration function device and a trusted environment device; and
sending a transaction request to a distributed management device, wherein the transaction request comprises an encrypted service token request, a certificate of the network registration function device, and a signature of the network registration function device for the transaction request.

19. The method according to claim 18, wherein the transaction request further comprises an identifier of an authorization contract that the network registration function device requests to invoke.

20. The method according to claim 18 or 19, further comprising:
receiving an encrypted service token from the distributed management device;
decrypting the encrypted service token by using the symmetric key; and
sending a decrypted service token to the second network function device.

21. A communication method, comprising:
receiving, by a distributed management device, a first transaction request from a network registration function device, wherein the first transaction request comprises an encrypted service token request of a network function device, a certificate of the network registration function device, and a signature of the network registration function device for the transaction request;
determining, based on the certificate, whether the signature is valid; and
sending a second transaction request to a trusted environment device based on determining that the signature is valid, wherein the second transaction request comprises an identity of the network registration function device and the encrypted service token request.

22. The method according to claim 21, wherein the first transaction request and the second transaction request further comprise an identifier of an authorization contract that the network registration function device requests to invoke.

23. The method according to claim 21 or 22, further comprising:
receiving an encrypted service token from the trusted environment device; and
sending the encrypted service token to the network registration function device.

24. A communication method, comprising:
receiving, by a trusted environment device, a transaction request from a distributed management device, wherein the transaction request comprises an identity of a network registration function device and an encrypted service token request of a second network function device;
determining a symmetric key between the network registration function device and the trusted environment device based on the identity of the network registration function device;
decrypting the encrypted service token request based on the symmetric key;
determining, based on the service token request, whether a first network function device provides a service requested by the second network function device; and
generating a service token for the second network function device based on determining that the first network function device provides the service requested by the second network function device.

25. The method according to claim 24, wherein the transaction request further comprises an identifier of an authorization contract that the network registration function device requests to invoke.

26. The method according to claim 24, wherein the service token request comprises at least one of the following:
an identity of the second network function device;
an identity of a network to which the second network function device belongs;
an identity of the first network function device from which the second network function device requests the service;
a type of the service requested by the second network function device from the first network function device; or
an identity of a network to which the first network function device belongs.

27. The method according to any one of claims 24 to 26, wherein the service token comprises at least one of the following:
the identity of the second network function device;
the identity of the first network function device;
a life cycle of the service token; or
a signature algorithm of the trusted environment device.

28. The method according to any one of claims 24 to 27, wherein determining whether the first network function device provides the service requested by the second network function device comprises:
invoking the authorization contract based on the identifier of the authorization contract;
obtaining an encrypted identity of the first network function device based on the identity of the first network function device;
determining registration information of the first network function device based on the encrypted identity of the first network function device, to obtain a service supported by the first network function device; and
determining whether the service supported by the first network function device comprises the type of the service requested by the second network function device from the first network function device.

29. The method according to any one of claims 24 to 28, further comprising:
encrypting the service token by using the symmetric key; and
sending an encrypted service token to the distributed management device.

30. A communication device, comprising a processor and a memory storing instructions, wherein when the instructions are executed by the processor, the communication device is enabled to perform the method according to any one of claims 1 to 7, any one of claims 8 to 10, any one of claims 11 to 15, claim 16 or 17, any one of claims 18 to 20, any one of claims 21 to 23, or any one of claims 24 to 29.

31. A chip, wherein the chip comprises a processing circuit, and the processing circuit is configured to perform the method according to any one of claims 1 to 7, any one of claims 8 to 10, any one of claims 11 to 15, claim 16 or 17, any one of claims 18 to 20, any one of claims 21 to 23, or any one of claims 24 to 29.

32. A computer-readable storage medium, wherein the computer-readable storage medium stores instructions, and when the instructions are executed by a communication device, the communication device is enabled to perform the method according to any one of claims 1 to 7, any one of claims 8 to 10, any one of claims 11 to 15, claim 16 or 17, any one of claims 18 to 20, any one of claims 21 to 23, or any one of claims 24 to 29.
